(19) Europäisches Patentamt
European Patent Office
Office européen des brevets

(11) **EP 4 624 871 A1**

(12) **EUROPEAN PATENT APPLICATION**
published in accordance with Art. 153(4) EPC

(43) Date of publication:
**01.10.2025 Bulletin 2025/40**

(21) Application number: **23894383.1**

(22) Date of filing: **01.11.2023**

(51) International Patent Classification (IPC):
**G01D 5/20** (2006.01)     **G01B 7/00** (2006.01)

(52) Cooperative Patent Classification (CPC):
**G01D 5/2053; G01B 7/00; G01D 5/20**

(86) International application number:
**PCT/JP2023/039461**

(87) International publication number:
**WO 2024/111371 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 JP 2022188428**

(71) Applicant: **DENSO CORPORATION
Kariya-city, Aichi 448-8661 (JP)**

(72) Inventors:
• **KONO, Tsukasa
Kariya-city Aichi 448-8661 (JP)**
• **KOBAYASHI, Atsushi
Kariya-city Aichi 448-8661 (JP)**
• **MURAYAMA, Ryosuke
Kariya-city Aichi 448-8661 (JP)**
• **MATSUMOTO, Koichiro
Kariya-city Aichi 448-8661 (JP)**
• **SUGITO, Tatsuaki
Kariya-city Aichi 448-8661 (JP)**

(74) Representative: **Kuhnen & Wacker
Patent- und Rechtsanwaltsbüro PartG mbB
Prinz-Ludwig-Straße 40A
85354 Freising (DE)**

(54) **POSITION DETECTION DEVICE**

(57)     A position detection device includes a first target (22, 23) that reciprocates in a predetermined movement direction (Dc), a second target (24, 25) that reciprocates together with the first target in the movement direction, and a substrate (30). The substrate is disposed on one side of the substrate in a normal direction (Da) with respect to the first and second targets, and has a first receiver coil and a second receiver coil that output a detection signal according to a position of the first target by electromagnetic induction. The substrate has a third receiver coil and a fourth receiver coil that output a detection signal according to a position of the second target by electromagnetic induction. A first receiving area (301, 302) occupied by the first and second receiver coils within the substrate, and a second receiving area (303, 304) occupied by the third and fourth receiver coils within the substrate are arranged side by side in the movement direction. The first target reciprocates within a movement range (W1a, W1b) in which the first target does not overlap with the other side of the normal direction with respect to the second receiving area.

**FIG. 1**

## Description

CROSS REFERENCE TO RELATED APPLICATIONS

The present application is based on Japanese Patent Application No. 2022-188428 filed on November 25, 2022, the description of which is incorporated herein by reference.

TECHNICAL FIELD

The present disclosure relates to a position detection device.

BACKGROUND

As this type of position detection device, for example, an angular position sensor described in Patent Document 1 is conventionally known. The angular position sensor described in this Patent Document 1 utilizes electromagnetic induction to detect a rotational position of a detection object that rotates around a rotary shaft center. For this reason, the angular position sensor of Patent Document 1 includes two coil combinations each consisting of a transmitter coil that generates an AC magnetic field and two receiver coils arranged inside the transmitter coil.

PRIOR ART DOCUMENT

PATENT DOCUMENT

Patent Document 1: US 2022/0136869A1

SUMMARY OF INVENTION

In Patent Document 1, the object to be detected (detection object), whose rotational position is detected by the angular position sensor, rotates one or more revolutions around a rotary shaft center, but depending on the application, it is also expected that the object to be detected may move back and forth within a limited operating range. In order to achieve redundancy in such a case, the inventors have devised the following configuration. In other words, the inventors devised a configuration in which a first target and a second target are provided on a detection object, and the position detection device is equipped with a receiver coil for detecting the position of the first target and a receiver coil for detecting the position of the second target, respectively.

However, in such a configuration devised by the inventors, there is a concern that one of the first target and the second target may affect the output value of the receiver coil used to detect the position of the other target. As a result of detailed studies by the inventors, the above has been found.

In consideration of the above, the present disclosure aims to reduce the influence of the first target on the output value of the receiver coil for detecting a position of the second target in the position detection device that detects the position of the first target and the position of the second target, respectively.

In order to achieve the above object, according to one aspect of the present disclosure, a position detection device includes:

a first target that reciprocates in a predetermined movement direction,
a second target that reciprocates in the movement direction together with the first target, and
a substrate having a first transmitter coil and a second transmitter coil, a first receiver coil and a second receiver coil that generate an induced current due to electromagnetic induction caused by an energization of the first transmitter coil, outputting detection signals corresponding to a position of the first target, and a third receiver coil and a fourth receiver coil generate an induced current due to electromagnetic induction caused by an energization of the second transmitter coil, outputting detection signals corresponding to a position of the second target.

The substrate is disposed to face both the first target and the second target, with a normal direction defined as the direction intersecting the movement direction and on one side of the normal direction relative to the first target and the second target.

A first receiving area occupied by the first receiver coil and the second receiver coil in the substrate, and a second receiving area occupied by the third receiver coil and the fourth receiver coil in the substrate are arranged side by side in the movement direction.

The first target reciprocates within a movement range in which the first target does not overlap with the other side of the normal direction with respect to the second receiving area.

In this way, it is possible to prevent the first one-side target from interfering with the magnetic flux passing through the third and fourth receiver coils for detecting the positions of the second targets. Therefore, it is possible to reduce the influence of the first one-side target 22 on each output value (i.e., each detection signal) of the third and fourth receiver coils.

In addition, in some part of the application document, some elements may be provided with reference symbols in parentheses. In this case, the reference symbol merely indicates an example of correspondence between the element and the specific configuration of the embodiment described later. Therefore, the present disclosure is not limited by the configurations indicated by the reference symbols.

BRIEF DESCRIPTION OF DRAWINGS

FIG. 1 is a schematic diagram illustrating a position detection device, viewed along a member axial direction, according to a first embodiment;

FIG. 2 is a cross-sectional view taken along a line II-II of FIG. 1, showing a vertical cross section of the position detection device;

FIG. 3 is a cross-sectional view taken along a line III-III of FIG. 1, showing a vertical cross section of the position detection device in a different orientation from in FIG. 2;

FIG. 4 is a top view illustrating only a rotary member of the position detection device according to the first embodiment;

FIG. 5 is a diagram illustrating a substrate of the position detection device and schematically illustrating each coil in the substrate according to the first embodiment;

FIG. 6 is a view in a direction indicated by an arrow VI of FIG. 5, schematically illustrating each transmitter coil in the substrate;

FIG. 7 is a schematic diagram corresponding to FIG. 5, in which receiver coils shown in FIG. 5 is replaced by receiving areas formed by the receiver coils;

FIG. 8 is a block diagram of the position detection device according to the first embodiment;

FIG. 9 is a diagram illustrating an example of a waveform of a first voltage value output from the first receiver coil and a waveform of a second voltage value output from the second receiver coil in the first embodiment;

FIG. 10 is a diagram illustrating a substrate of a position detection device according to a second embodiment, schematically illustrating each coil in the substrate, and corresponding to FIG. 5;

FIG. 11 is a diagram illustrating a substrate of a position detection device according to a third embodiment, schematically illustrating each coil in the substrate, and corresponding to FIG. 5;

FIG. 12 is a diagram illustrating a substrate of a position detection device according to a fourth embodiment, schematically illustrating each coil in the substrate, and corresponding to FIG. 5;

FIG. 13 is a block diagram of a position detection device according to a fifth embodiment, and corresponding to FIG. 8;

FIG. 14 is a flowchart showing a control processing executed by a first failure detection unit in a fifth embodiment;

FIG. 15 is a diagram showing a relationship between the first sensor output and the second sensor output and the rotation angle of a rotary member in a first comparative example to be compared with the fifth embodiment;

FIG. 16 is a schematic diagram showing a schematic configuration of a position detection device according to a sixth embodiment, viewed in a direction along an axial direction of a member, and corresponding to FIG. 1;

FIG. 17 is a cross-sectional view taken along a line XVII-XVII of FIG. 16, and corresponding to FIG. 2; and

FIG. 18 is a cross-sectional view taken along a line XVIII-XVIII of FIG. 16, and corresponding to FIG. 3.

DETAILED DESCRIPTION

Hereinafter, embodiments are described with reference to the drawings. In the following embodiments, the same reference numeral is given to the same or equivalent parts in the drawings.

First Embodiment:

The present embodiment describes an example in which a position detection device 1 is used to detect a rotational position of a brake pedal or accelerator pedal of a vehicle pedal device. In the following description, the brake pedal or accelerator pedal may be referred to simply as a pedal.

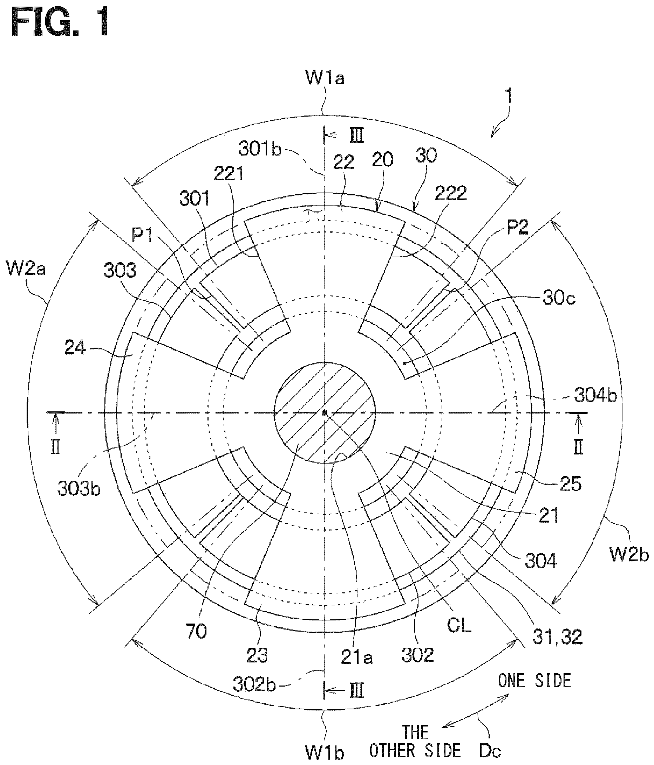

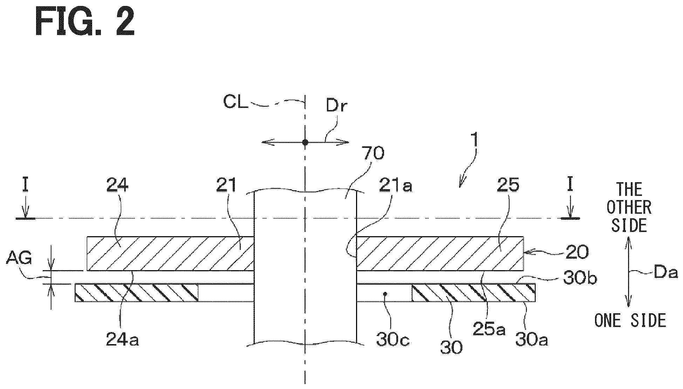

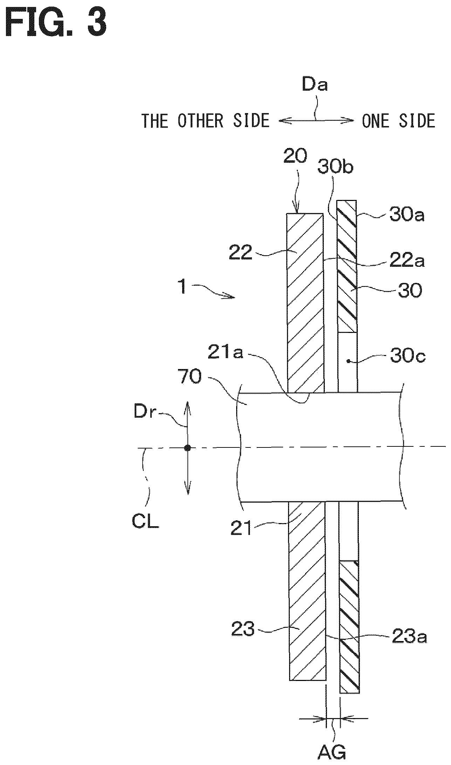

As shown in FIGS. 1 to 3, the position detection device 1 in the present embodiment has a rotary member 20 and a substrate 30. A rotary shaft center CL shown in FIGS. 1 to 3 is the center of rotation of a rotary shaft 70 of the pedal and the rotary member 20. In the description of the present embodiment, an axial direction Da of the rotary shaft center CL is also referred to as a member axial direction Da, a radial direction Dr of the rotary shaft center CL is also referred to as a member radial direction Dr, and a circumferential direction Dc of the rotary shaft center CL is also referred to as a member circumferential direction Dc. These directions Da, Dr and Dc are directions which cross each other, and are, strictly speaking, directions which are perpendicular to each other. FIG. 1 is a cross-sectional view taken along a line I-I of FIG. 2.

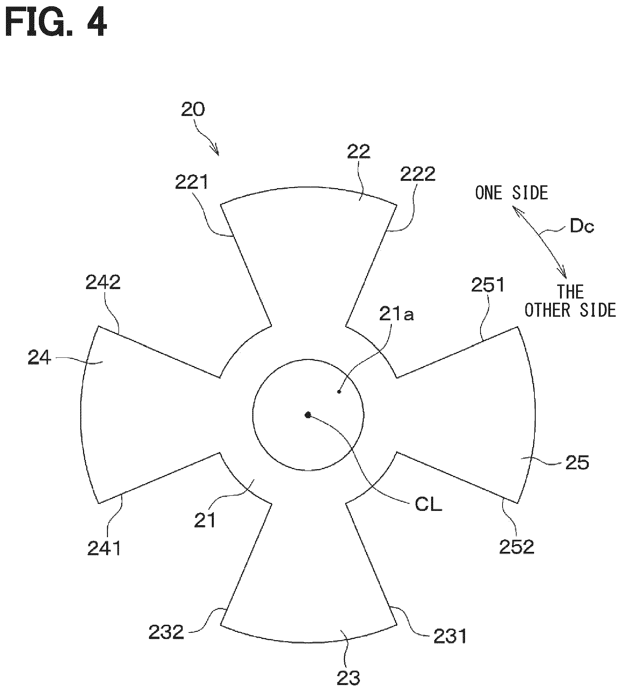

The rotary member 20 is made of metal and is formed as a flat plate having a thickness in the member axial direction Da. As shown in FIGS. 1 to 4, the rotary member 20 is couple to the rotary shaft 70 of the pedal to be rotated together without relative rotation. For example, the rotary member 20 may be made non-rotatable relative to the rotary shaft 70 through a detent key member, or it may be made non-rotatable by being welded to the rotary shaft 70.

The rotary member 20 is supported by the non-rotary member via the rotary shaft 70 so that the rotary member 20 is rotatable about the predetermined rotary shaft center CL, and rotates together with the pedal and the rotary shaft 70. Therefore, a rotational position of the pedal can be detected by detecting a rotational position of the rotary member 20. In other words, the rotational position of the rotary member 20 is also the rotational position of the pedal and the rotational position of the rotary shaft 70 that is a detection object.

Since the rotary member 20 is coupled to the rotary shaft 70 of the pedal, the rotary member 20 does not rotate once around the rotary shaft center CL, but rather reciprocates within a predetermined angular range around the rotary shaft center CL as the pedal is depressed. In FIG. 1, a part of the outline of each target 22, 23, 24, 25 of the rotary member 20 at its end position in its reciprocating motion is illustrated by a dash-dot-dot line.

The rotary member 20 includes a connecting portion 21, two first targets 22 and 23, and two second targets 24 and 25. That is, the two first targets 22 and 23 and the two second targets 24 and 25 included in that rotary member 20 rotate together around the rotary shaft center CL. The two first targets 22 and 23 and the two second targets 24 and 25 both reciprocate in the member circumferential direction Dc according to depressing of the pedal. The member circumferential direction Dc corresponds to a predetermined direction of movement in the present embodiment.

For example, the rotary member 20 is configured as a single component including the connecting portion 21, two first targets 22 and 23, and two second targets 24 and 25. For example, the rotary member 20 is formed as a flat plate such that a thickness of the rotary member 20 in the member axial direction Da is uniform, and thus the thicknesses of the four targets 22 to 25 in the member axial direction Da are the same as each other. In the present embodiment, the two first targets 22 and 23 and the two second targets 24 and 25 may be referred to collectively as targets 22 to 25.

The connecting portion 21 is located in the center portion of the rotary member 20 and has a circular shape centered at the rotary shaft center CL. A fitting hole 21a is formed inside the connecting portion 21, which passes through the connecting portion 21 in the member axial direction Da, and the rotary shaft 70 is fitted into the fitting hole 21a so that the rotary shaft 70 is not rotatable relative to the connecting portion 21. In other words, the rotary member 20 is connected to the rotary shaft 70 at this connecting portion 21.

The two first targets 22 and 23 are each formed to protrude outward from the connecting portion 21 in the member radial direction Dr, and the two second targets 24 and 25 are also each formed to project outward from the connecting portion 21 in the member radial direction Dr.

A first one-side target 22, which is one of the two first targets 22, 23, is disposed on the opposite side across the rotary shaft center CL to a first other-side target 23, which is the other of the two first targets 22, 23. A second one-side target 24, which is one of the two second targets 24, 25, is disposed on the opposite side across the rotary shaft center CL to a second other-side target 25, which is the other of the two second targets 24, 25.

In detail, the four targets 22 to 25 are arranged in the following order: the first one-side target 22, the second one-side target 24, the first other-side target 23, and the second other-side target 25. They are spaced with equal pitch (specifically, 90 degree pitch) and disposed in a direction toward one side along the member circumferential direction Dc. For example, when viewed in a direction along the member axial direction Da, the four targets 22 to 25 are arranged as a whole to be point symmetrical about the rotary shaft center CL.

One side of the first one-side target 22 in the member axial direction Da has a facing surface 22a facing an other surface 30b of the substrate 30, and one side of the first other-side target 23 in the member axial direction Da also has a facing surface 23a facing the other surface 30b of the substrate 30. One side of the second one-side target 24 in the member axial direction Da has a facing surface 24a facing the other surface 30b of the substrate 30, and one side of the second other-side target 25 in the member axial direction Da also has a facing surface 25a facing the other surface 30b of the substrate 30. These facing surfaces 22a, 23a, 24a, 25a are parallel to the other surface 30b of the substrate 30.

One side of the first one-side target 22 in the member circumferential direction Dc has a one end edge 221 and an other side of the first one-side target 22 in the member circumferential direction Dc has an other end edge 222. The first one-side target 22 has a circular-sector shape in which a width of the first one-side target 22 in the member circumferential direction Dc increases in a direction outward along the member radial direction Dr. Thus, the one end edge 221 and the other end edge 222 of the first one-side target 22 each extend straight in the member radial direction Dr when viewed in a direction along the member axial direction Da. That is, the one end edge 221 and the other end edge 222 of the first one-side target 22 each extend orthogonally to a movement direction of the first one-side target 22 which is the member circumferential direction Dc.

The first other-side target 23, second one-side target 24, and second other-side target 25 also have the same circular-sector shape as the first one-side target 22. In the present embodiment, all the four targets 22 to 25 are identical in shape.

Accordingly, one side of the first other-side target 23 in the member circumferential direction Dc has a one end edge 231, and the other side of the first other-side target 23 in the member circumferential direction Dc has an other end edge 232. The one end edge 231 and the other end edge 232 extend straight in the member radial direction Dr when viewed in a direction along the member axial direction Da. Further, one side of the second one-side target 24 in the member circumferential direction Dc has a one end edge 241, and the other side of the second one-side target 24 in the member circumferential direction Dc has the other end edge 242. The one end edge 241 and the other end edge 242 extend straight in the member radial direction Dr when viewed in a direction along the member axial direction Da. Further, one side of the second other-side target 25 in the member circumferential direction Dc has a one end edge 251, and the other side of the second other-side target 25 in the member circumferential direction Dc has the other end edge 252. The one end edge 251 and the other end edge 252 extend straight in the member radial direction Dr when viewed in a direction along the member axial direction Da.

In the present embodiment, since all four targets 22 to 25 are the same shape and rotate together as described above, the movement ranges W1a, W1b, W2a and W2b of the respective targets 22, 23, 24 and 25 are the same length in the member circumferential direction Dc.

The movement range W1a of the first one-side target 22 is a maximum movable range of the first one-side target 22 in the member circumferential direction Dc within which the first one-side target 22 reciprocates. The movement range W1b of the first other-side target 23 is a maximum movable range of the first other-side target 23 in the member circumferential direction Dc within which the first other-side target 23 reciprocates. The movement range W2a of the second one-side target 24 is a maximum movable range of the second one-side target 24 in the member circumferential direction Dc within which the second one-side target 24 reciprocates. The movement range W2b of the second other-side target 25 is a maximum movable range of the second other-side target 25 in the member circumferential direction Dc within which the second other-side target 25 reciprocates.

As shown in FIGS. 1 to 3 and 5, the substrate 30 is a multilayer printed circuit board on which wiring patterns are formed and electrical components (not shown) are mounted. The substrate 30 has one surface 30a and the other surface 30b which are flat and perpendicular to the member axial direction Da. In other words, the normal direction of the substrate 30 coincides with the member axial direction Da. The one surface 30a of the substrate 30 is on one side of the substrate 30 in the member axial direction Da, and the other surface 30b of the substrate 30 is on the other side of the substrate 30 opposite the one side of the substrate 30 in the member axial direction Da.

The substrate 30 is a non-rotary member that does not rotate relative to a vehicle body or other components. Therefore, the rotary member 20 rotates relative to the substrate 30.

The substrate 30 is disposed on one side of the four targets 22 to 25 in the member axial direction Da. The other surface 30b of the substrate 30 faces each of the facing surfaces 22a to 25a of the four targets 22 to 25 with an axial gap AG in the member axial direction Da. This axial gap AG is equal at any point between the substrate 30 and each of the four targets 22 to 25.

The substrate 30 has a disk shape centered at the rotary shaft center CL. A through hole 30c is formed in the center of the substrate 30, which passes through the substrate 30 in the member axial direction Da. The rotary shaft 70 is inserted through this through hole 30c.

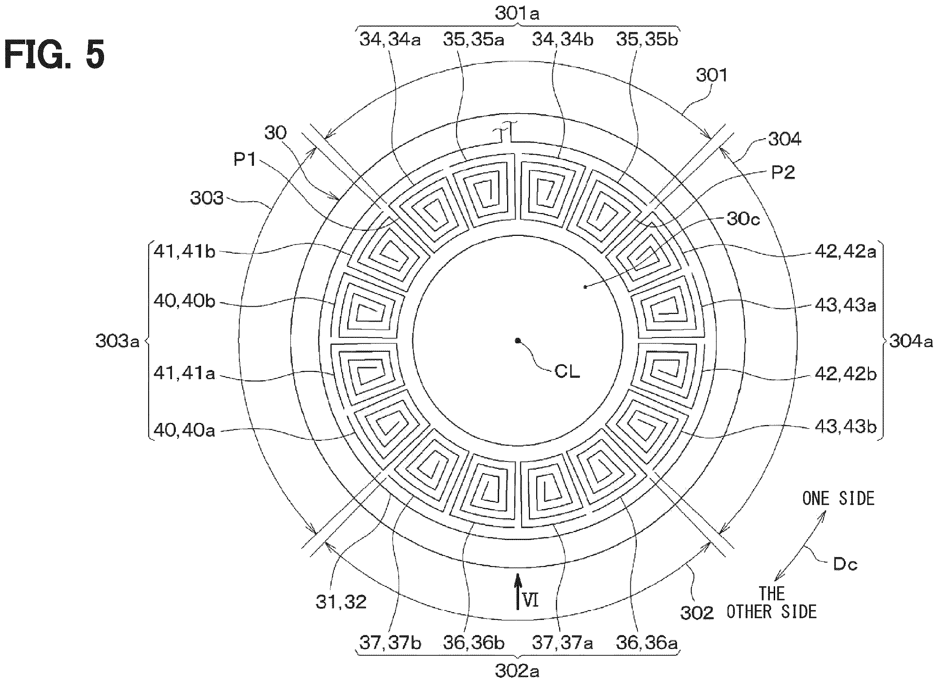

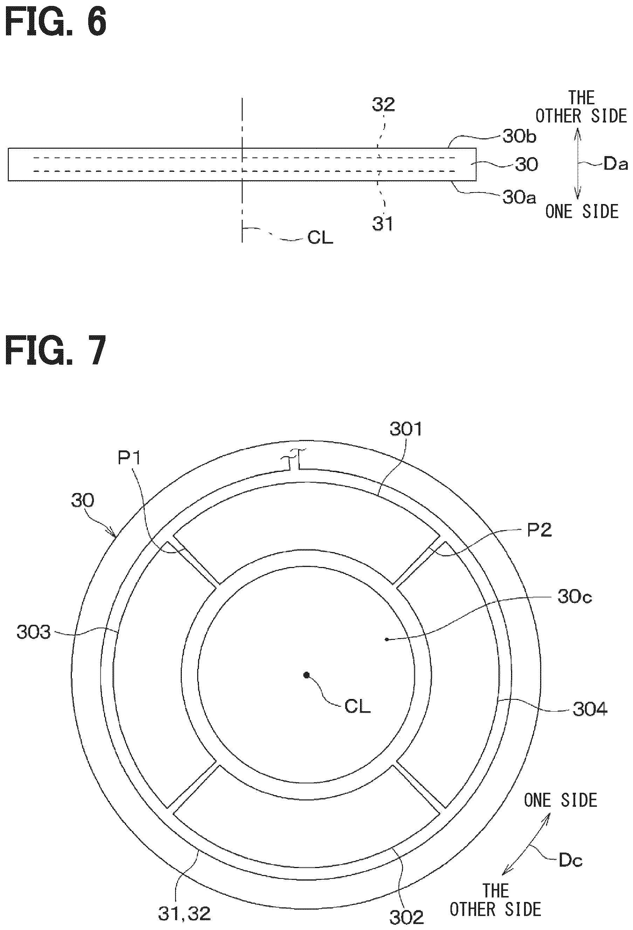

As shown in FIGS. 5 and 6, the substrate 30 has a first transmitter coil 31 and a second transmitter coil 32 formed as a part of the wiring pattern. The substrate 30 also has two first receiver coils 34, 36, two second receiver coils 35, 37, two third receiver coils 40, 42, and two fourth receiver coils 41, 43 formed as a part of the wiring pattern. In other words, all transmitter coils 31 and 32 and all receiver coils 34 to 37 and 40 to 43 in the position detection device 1 are formed on the single substrate 30.

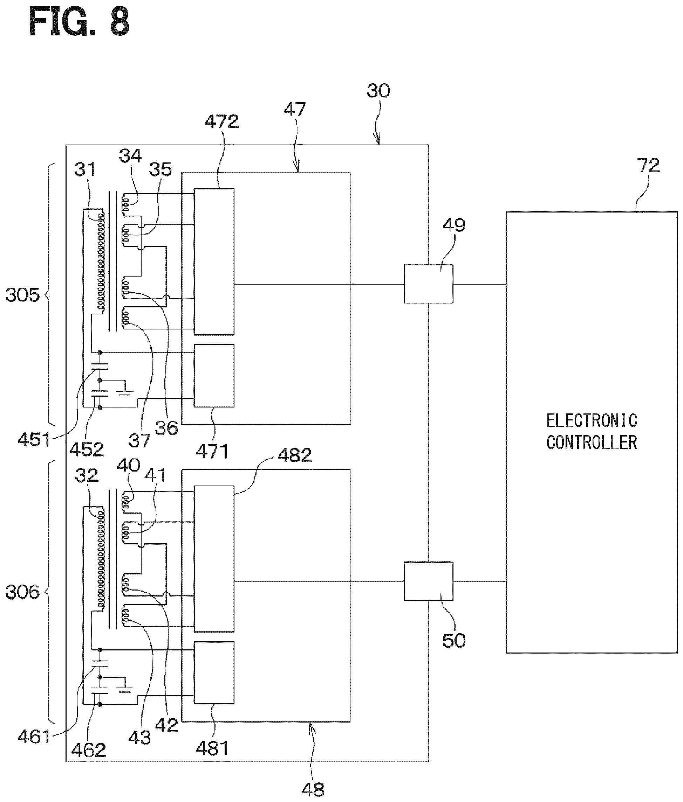

Each of the coils 31, 32, 34 to 37, and 40 to 43 possessed by the substrate 30 is connected via a not-shown connection wiring pattern to signal processors 47 and 48 (see FIG. 8) which are composed of an IC or the like mounted on the substrate 30. In FIGS. 5 and 6, each of the coils 31, 32, 34 to 37, and 40 to 43 is shown in a simplified manner for ease of viewing, and this is also applied in the drawings described below, which show each of the coils 31, 32, 34 to 37, and 40 to 43.

The first and second transmitter coils 31 and 32 are formed to overlap each other when viewed in a direction along the member axial direction Da, but are displaced from each other in the thickness direction of the substrate 30, i.e., the member axial direction Da. For example, the first transmitter coil 31 is disposed apart from and on one side od the second transmitter coil 32 in the member axial direction Da.

Each of the first and second transmitter coils 31 and 32 is wound one or more times and formed into a circular ring shape. The first and second transmitter coils 31 and 32 surround all the receiver coils 34 to 37 and 40 to 43 included in the substrate 30 when viewed in a direction along the member axial direction Da. In other words, when viewed in a direction along the member axial direction Da, all of its receiver coils 34 to 37, 40 to 43 are located inside the first transmitter coil 31 and inside the second transmitter coil 32.

Therefore, when an alternating current flows in the first transmitter coil 31, induced current flows to all receiver coils 34 to 37 and 40 to 43 due to electromagnetic induction caused by energizing the first transmitter coil 31. When an alternating current flows in the second transmitter coil 32, induced current flows to all receiver coils 34 to 37 and 40 to 43 due to electromagnetic induction caused by energizing that second transmitter coil 32. In order to avoid the magnetic fields generated by the first and second transmitter coils 31 and 32 canceling each other, for example, alternating current of the same phase and frequency flow through the first and second transmitter coils 31 and 32.

A first one-side receiver coil 34, which is one of the two first receiver coils 34 and 36, and a second one-side receiver coil 35, which is one of the two second receiver coils 35 and 37, are coils for detecting a position of the first one-side target 22 in the member circumferential direction Dc. That is, an induced electromotive force corresponding to the position of the first one-side target 22 is generated in each of the first one-side receiver coil 34 and the second one-side receiver coil 35.

A first other-side receiver coil 36, which is the other of the two first receiver coils 34 and 36, and a second other-side receiver coil 37, which is the other of the two second receiver coils 35 and 37, are coils for detecting a position of the first other-side target 23 in the member circumferential direction Dc. That is, an induced electromotive force corresponding to the position of the first other-side target 23 is generated in each of the first other-side receiver coil 36 and the second other-side receiver coil 37.

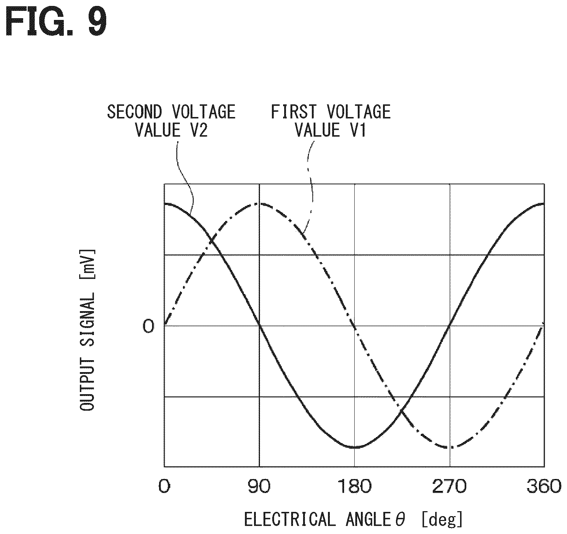

The two first receiver coils 34, 36 are electrically connected. In detail, the two first receiver coils 34, 36 are connected in series with each other in a direction in which their outputs (in other words, their induced electromotive forces) are reinforced. Therefore, the two first receiver coils 34 and 36 output detection signals according to the positions of the first targets 22 and 23. When two patterns of series connection are assumed, one in which the outputs of the two circuits are reinforced and the other in which the outputs of the two circuits are cancelled out, the "direction in which the outputs are reinforced" in relation to the above series connection means the direction in which the outputs are reinforced, which is one of the two patterns. The detection signals from the first receiver coils 34, 36 correspond to, for example, a first voltage value V1 shown in FIG. 9, which will be described later. The detection signal from the first receiver coils 34, 36 refers to a detection signal output from a conductor having the first receiver coils 34, 36, and does not mean that a detection signal is output individually from each of the two first receiver coils 34, 36 to the receiver 472 (see FIG. 8). The same applies to the following explanation.

The two second receiver coils 35, 37 are also electrically connected. In detail, the two second receiver coils 35 and 37 are connected in series with each other in a direction in which their outputs are reinforced. Therefore, the two second receiver coils 35 and 37 output detection signals according to the positions of the first targets 22 and 23. The detection signals from the second receiver coils 35, 37 correspond to, for example, a second voltage value V2 shown in FIG. 9, which will be described later. The outputs of the two first receiver coils 34, 36 corresponding to the positions of the first targets 22, 23 are the same. Similarly, the outputs of the two second receiver coils 35 and 37 corresponding to the positions of the first targets 22 and 23 become the same.

A third one-side receiver coil 40, which is one of the two third receiver coils 40 and 42, and a fourth one-side receiver coil 41, which is one of the two fourth receiver coils 41 and 43, are coils for detecting a position of the second one-side target 24 in the member circumferential direction Dc. That is, an induced electromotive force corresponding to the position of the second one-side target 24 is generated in each of the third one-side receiver coil 40 and the fourth one-side receiver coil 41.

A third other-side receiver coil 42, which is the other of the two third receiver coils 40 and 42, and a fourth other-side receiver coil 43, which is the other of the two fourth receiver coils 41 and 43, are coils for detecting a position of the second other-side target 25 in the member circumferential direction Dc. That is, an induced electromotive force corresponding to the position of the second other-side target 25 is generated in each of the third other-side receiver coil 42 and the fourth other-side receiver coil 43.

The two third receiver coils 40, 42 are electrically connected. In detail, the two third receiver coils 40, 42 are connected in series with each other in a direction in which their outputs (in other words, their induced electromotive forces) are reinforced. Therefore, the two third receiver coils 40 and 42 output detection signals according to the positions of the first targets 24 and 25.

The two fourth receiver coils 41 and 43 are also electrically connected. In detail, the two fourth receiver coils 41 and 43 are connected in series with each other in a direction in which their outputs are reinforced. Therefore, the two fourth receiver coils 41 and 43 output detection signals according to the positions of the first targets 24 and 25. The outputs of the two third receiver coils 40 and 42 corresponding to the positions of the second targets 24 and 25 are the same. Similarly, the outputs of the two fourth receiver coils 41 and 43 corresponding to the positions of the second targets 24 and 25 are also the same.

Each of the receiver coils 34 to 37 and 40 to 43 is composed of different wiring layers connected as appropriate through a via so that they do not interfere with each other (i.e., do not overlap). In FIG. 5 and the later drawings corresponding to FIG. 5, the vias in the substrate 30 are omitted as appropriate.

The first one-side receiver coil 34 has a first spiral section 34a and a second spiral section 34b. The first and second spiral sections 34a and 34b thereof each have a spiral pattern shape when viewed in a direction along the member axis direction Da. In other words, the first and second spiral sections 34a, 34b are each formed to have a spiral-wound planar curve when viewed in a direction along the member axis direction Da. The first and second spiral sections 34a and 34b are connected in series via, for example, a not-shown connection wiring pattern. The external shapes of the first and second spiral sections 34a and 34b are not limited to the shape shown in FIG. 5, but may be other shapes such as circular shapes.

The same is applied for the other receiver coils 35 to 37 and 40 to 43. That is, the second one-side receiver coil 35 has a first spiral section 35a and a second spiral section 35b connected in series with each other. The first other-side receiver coil 36 has a first spiral section 36a and a second spiral section 36b connected in series with each other, and the second other-side receiver coil 37 has a first spiral section 37a and a second spiral section 37b connected in series with each other.

The third one-side receiver coil 40 has a first spiral section 40a and a second spiral section 40b connected in series with each other, and the fourth one-side receiver coil 41 has a first spiral section 41a and a second spiral section 41b connected in series with each other. The third other-side receiver coil 42 has a first spiral section 42a and a second spiral section 42b connected in series with each other, and the fourth other-side receiver coil 43 has a first spiral section 43a and a second spiral section 43b connected in series with each other. These spiral sections 35a, 35b, 36a, 36b, 37a, 37b, 40a, 40b, 41a, 41b, 42a, 42b, 43a, 43b each have a spiral pattern shape when viewed in a direction along the member axis direction Da, similar to the spiral sections 34a and 34b of the first one-side receiver coil 34.

The spiral sections 34a and 34b of the first one-side receiver coil 34 are arranged to overlap one side of the first one-side target 22 in the member axial direction Da at any position within the movement range W1a of the first one-side target 22. The spiral sections 35a and 35b of the second one-side receiver coil 35 are also arranged to overlap one side of the first one-side target 22 in the member axial direction Da at any position within the movement range W1a of the first one-side target 22.

The spiral sections 34a, 34b, 35a, 35b are arranged in the order: the first spiral section 34a, the first spiral section 35a, the second spiral section 34b, and the second spiral section 35b, from one side to the other side in the member circumferential direction Dc. The spiral sections 34a, 34b, 35a, 35b form one area when viewed in a direction along the member axis direction Da.

In other words, the first one-side receiver coil 34 and the second one-side receiver coil 35 form a first one-side receiving area 301 that the receiver coils 34 and 35 occupy in the substrate 30. The first one-side receiver coil 34 and the second one-side receiver coil 35 constitute a first one-side receiver coil group 301a as a combination of the receiver coils 34 and 35. The first one-side receiver coil group 301a corresponds to the one-side receiver coil group of the present disclosure.

As described above, the spiral sections 36a and 36b of the first other-side receiver coil 36 are arranged to overlap one side of the first other-side target 23 in the member axial direction Da at any position within the movement range W1b of the first other-side target 23. The spiral sections 37a and 37b of the second other-side receiver coil 37 are also arranged to overlap the one side of the first other-side target 23 in the member axial direction Da at any position within the movement range W1b of the first other-side target 23.

And these spiral sections 36a, 36b, 37a, 37b are arranged in the order: the first spiral section 36a, the first spiral section 37a, the second spiral section 36b, the second spiral section 37b, from one side to the other side in the member circumferential direction Dc. The spiral sections 36a, 36b, 37a, 37b form one area when viewed in a direction along the member axis direction Da.

In other words, the first other-side receiver coil 36 and the second other-side receiver coil 37 form a first other-side receiving area 302 that the receiver coils 36 and 37 occupy in the substrate 30. The first other-side receiver coil 36 and the second other-side receiver coil 37 constitute a first other-side receiver coil group 302a as a combination of the receiver coils 36 and 37. The first-other side receiver coil group 302a corresponds to the other receiver coil group of the present disclosure.

The spiral sections 40a and 40b of the third one-side receiver coil 40 are arranged to overlap one side of the second one-side target 24 in the member axial direction Da at any position within the movement range W2a of the second one-side target 24. The spiral sections 41a and 41b of the fourth one-side receiver coil 41 are also arranged to overlap the one side of the second one-side target 24 in the member axial direction Da at any position within the movement range W2a of the second one-side target 24.

The spiral sections 40a, 40b, 41a, 41b are arranged in the order: the first spiral section 40a, the first spiral section 41a, the second spiral section 40b and the second spiral section 41b, from one side to the other side in the member circumferential direction Dc. The spiral sections 40a, 40b, 41a, 41b form one are when viewed in a direction along the member axis direction Da.

That is, the third one-side receiver coil 40 and the fourth one-side receiver coil 41 form a second one-side receiving area 303 that the receiver coils 40 and 41 occupy in the substrate 30. The third one-side receiver coil 40 and the fourth one-side receiver coil 41 constitute a second one-side receiver coil group 303a as a combination of the receiver coils 40 and 41.

The spiral sections 42a and 42b of the third other-side receiver coil 42 are arranged to overlap one side of the second other-side target 25 in the member axial direction Da at any position within the movement range W2b of the second other-side target 25. The spiral sections 43a and 43b of the fourth other-side receiver coil 43 are also arranged to overlap the one side of the second other-side target 25 in the member axial direction Da at any position within the movement range W2b of the second other-side target 25.

The spiral sections 42a, 42b, 43a, 43b are arranged in the order: the first spiral section 42a, the first spiral section 43a, the second spiral section 42b and the second spiral section 43b, from one side to the other side in the member circumferential direction Dc. The spiral sections 42a, 42b, 43a, 43b form one area when viewed in a direction along the member axis direction Da.

The third other-side receiver coil 42 and the fourth other-side receiver coil 43 form a second other-side receiving area 304 that the receiver coils 42 and 43 occupy in the substrate 30. The third other-side receiver coil 42 and the fourth other-side receiver coil 43 constitute a second other-side receiver coil group 304a as a combination of the receiver coils 42 and 43.

FIG. 7 shows the receiving areas 301, 302, 303, and 304 described above, which are substitutions of the receiver coils 34 to 37 and 40 to 43 shown in FIG. 5. The above-mentioned first one-side receiving area 301 and first other-side receiving area 302 correspond to the first receiving area of the present disclosure, and the second one-side receiving area 303 and second other-side receiving area 304 correspond to the second receiving area of the present disclosure.

As shown in FIGS. 5 and 7, the spiral sections 34a to 43b of the receiver coils 34 to 37 and 40 to 43, as a whole, are spaced in the member circumferential direction Dc to form an annular shape centered at the rotary shaft center CL. In other words, the four receiving areas 301 to 304 are also aligned in the member circumferential direction Dc so that as a whole they form an annular shape centered at the rotary shaft center CL. The above spiral sections 34a to 43b mean spiral sections 34a, 34b, 35a, 35b, 36a, 36b, 37a, 37b, 40a, 40b, 41a, 41b, 42a, 42b, 43a, 43b.

The four receiving areas 301 to 304 are arranged in the order: the first one-side receiving area 301, the second other-side receiving area 304, the first other-side receiving area 302, and the second one-side receiving area 303, from one side to the other side in the member circumferential direction Dc. Specifically, the four receiving areas 301 to 304 are arranged at a pitch of 90 degrees in the member circumferential direction Dc, centered at the rotary shaft center CL.

Therefore, the first one-side receiving area 301 is located opposite to the first other-side receiving area 302 across the rotary shaft center CL, and the second one-side receiving area 303 is located opposite to the second other-side receiving area 304 across the rotary shaft center CL. That is, the first one-side receiver coil group 301a is located opposite to the first other-side receiver coil group 302a across the rotary shaft center CL, and the second one-side receiver coil group 303a is located opposite to the second other-side receiver coil group 304a across the rotary shaft center CL.

As a confirmation, a one-side end position P1 of the first one-side receiving area 301 in the member circumferential direction Dc (i.e., circumferential one-side end position P1) coincides with a one-side end position of the first one-side receiver coil 34 (i.e., an end position of the first spiral section 34a on one side in the circumferential direction). An other-side end position P2 of the first one-side receiving area 301 in the member circumferential direction Dc (i.e., circumferential other-side end position P2) coincides with an other-side end position of the second one-side receiver coil 35 (i.e., an end position of the second spiral section 35b on the other side in the circumferential direction). This relationship is also applied for the first other-side receiving area 302, the second one-side receiving area 303, and the second other-side receiving area 304.

As shown in FIGS. 1 and 7, the first one-side target 22 reciprocates in the member circumferential direction Dc within the movement range W1a of the first one-side target 22, as described above. However, the movement range W1a of the first one-side target 22 is configured so that the first one-side target 22 does not overlap the other sides of the second one-side receiving area 303 and the second other-side receiving area 304 in the member axial direction Da. In other words, the first one-side target 22 reciprocates in the member circumferential direction Dc within a range out of the second one-side receiving area 303 and the second other-side receiving area 304.

The same is applied for the other movement ranges W1b, W2a, and W2b. The movement range W1b of the first other-side target 23 is configured so that the first other-side target 23 does not overlap the other sides of the second one-side receiving area 303 and the second other-side receiving area 304 in the member axial direction Da. The movement range W2a of the second one-side target 24 is configured so that the second one-side target 24 does not overlap the other sides of the first one-side receiving area 301 and the first other-side receiving area 302 in the member axial direction Da. The movement range W2b of the second other-side target 25 is configured so that the second other-side target 25 does not overlap the other sides of the first one-side receiving area 301 and the first other-side receiving area 302 in the member axial direction Da.

More specifically, the first one-side target 22 reciprocates in the circumferential direction Dc without departing from an area located on the other side of the circumferential one-side end position P1 of the first one-side receiving area 301 and on the one side of the circumferential other-side end position P2 of the first one-side receiving area 301 in the member circumferential direction Dc. This is also applied for the location relationships between the other targets 23, 24, 25 and the receiving areas 302, 303, 304.

The movement range W1a of the first one-side target 22 is a range distributed in the member circumferential direction Dc with respect to the center position 301b of the first one-side receiving area 301 in the member circumferential direction Dc. Specifically, the movement range W1a is symmetrical in the member circumferential direction Dc with respect to the center position 301b of the first one-side receiving area 301 in the member circumferential direction Dc. The "symmetry" of the movement range W1a is not strictly true. The same applies to the "symmetry" of the other movement ranges W1b, W2a, and W2b described later.

Similarly, the movement range W1b of the first other-side target 23 is a range distributed in the member circumferential direction Dc with respect to the center position 302b of the first other-side receiving area 302 in the member circumferential direction Dc. Specifically, the movement range W1b is symmetrical in the member circumferential direction Dc with respect to the center position 302b of the first other-side receiving area 302 in the member circumferential direction Dc.

The movement range W2a of the second one-side target 24 is a range distributed in the member circumferential direction Dc with respect to the center position 303b of the second one-side receiving area 303 in the member circumferential direction Dc. Specifically, the movement range W2a is symmetrical in the member circumferential direction Dc with respect to the center position 303b of the second one-side receiving area 303 in the member circumferential direction Dc.

Further, the movement range W2b of the second other-side target 25 is a range distributed in the member circumferential direction Dc with respect to the center position 304b of the second other-side receiving area 304 in the member circumferential direction Dc. Specifically, the movement range W2b is symmetrical in the member circumferential direction Dc with respect to the center position 304b of the second other-side receiving area 304 in the member circumferential direction Dc.

As shown in FIG. 8, various electrical components are mounted on the substrate 30 in addition to the coils 31, 32, 34 to 37, and 40 to 43 described above. Specifically, a plurality of capacitors 451, 452, 461, 462, ICs constituting the first signal processor 47, ICs constituting the second signal processor 48, a first terminal 49, and a second terminal 50 are also mounted on the substrate 30.

The first transmitter coil 31, the two first receiver coils 34, 36, the two second receiver coils 35, 37, the two capacitors 451, 452, the first signal processor 47, and the first terminal 49 constitute a first system 305. The second transmitter coil 32, the two third receiver coils 40, 42, the two fourth receiver coils 41, 43, the two capacitors 461, 462, second signal processor 48, and the second terminal 50 constitute a second system 306. Since the first system 305 and the second system 306 are independent as electrical circuits, the position detection device 1 can detect the rotational position of the rotary member 20 by one of the systems 305 and 306 even if another of the systems malfunctions.

The first and second signal processors 47 and 48 each function as an in-vehicle microcomputer with a CPU, RAM, ROM, nonvolatile rewritable memory, etc., not shown. That is, the first and second signal processors 47 and 48 individually read and execute computer programs stored in ROM or nonvolatile rewritable memory, which are non-transitory substantive storage media. By executing this computer program, a method corresponding to the computer program is performed. The same is applied for an electronic controller 72, which is discussed below. CPU is an abbreviation for Central Processing Unit, ROM is an abbreviation for Read Only Memory, RAM is an abbreviation for Random Access Memory.

The first transmitter coil 31, the two first receiver coils 34, 36, and the two second receiver coils 35, 37 are individually connected to the first signal processor 47. For example, the two capacitors 451 and 452 are connected in series between both ends of the first transmitter coil 31 and the first signal processor 47, and a portion connecting each capacitor 451 and 452 to each other is connected to ground. The first signal processor 47 is then connected to the electronic controller 72 located outside the position detection device 1 via the first terminal 49 fixed to the substrate 30.

The same is applied for the connection relationship around the second signal processor 48. That is, the second transmitter coil 32, the two third receiver coils 40, 42, and the two fourth receiver coils 41, 43 are individually connected to the second signal processor 48. For example, two capacitors 461 and 462 are connected in series between both ends of the second transmitter coil 32 and the second signal processor 48, and a portion connecting each capacitor 461 and 462 to each other is connected to ground. The second signal processor 48 is then connected to the electronic controller 72 located outside via the second terminal 50 fixed to the substrate 30. Thus, the first signal processor 47 and the second signal processor 48 output the rotational position (in other words, the rotation angle) of the rotary member 20 separately to the electronic controller 72.

Next, the operation of the first signal processor 47 described above will be described.

As shown in FIG. 8, the first signal processor 47 includes an oscillator 471 and a receiver 472. The oscillator 471 is connected to both ends of the first transmitter coil 31 and applies an alternating current of a predetermined frequency to the first transmitter coil 31. This causes the first transmitter coil 31 to generate a magnetic field in the member axial direction Da that passes through the receiver coils 34 to 37 and 40 to 43. This magnetic field causes an induced current to flow in the receiver coils 34 to 37 and 40 to 43, respectively.

The receiver 472 is connected to two first receiver coils 34 and 36 connected in series, and two second receiver coils 35 and 37 connected in series. The receiver 472 acquires a conversion signal (i.e., the first voltage value V1 in FIG. 9) by performing demodulation and AD conversion on the outputs from the two first receiver coils 34 and 36. The output from the two first receiver coils 34, 36 is the sum of the output from one of the two first receiver coils 34, 36 and the output from the other one. The receiver 472 also acquires a conversion signal (i.e., the second voltage value V2 in FIG. 9) obtained by performing demodulation and AD conversion on the outputs from the two second receiver coils 35 and 37. The output from the two second receiver coils 35, 37 is the sum of the output from one of the two second receiver coils 35, 37 and the output from the other one.

Based on each of the acquired conversion signals, the receiver 472 calculates the rotation angle (i.e., rotational position) of the rotary member 20 by computing, for example, an inverse tangent function using those conversion signals. The relationship between the electrical angle $\theta$ in the electrical signals of the first and second receiver coils 34, 36, 35, and 37 and the rotation angle (i.e., the mechanical angle) of the rotary member 20 is determined in advance depending on, for example, the sizes of the first targets 22, 23 and the receiver coils 34, 36, 35, and 37. Therefore, the rotation angle of the rotary member 20 can be calculated based on the electrical angle $\theta$. For example, in the present embodiment, the relationship between the above electrical angle $\theta$ and the mechanical angle is the same for all of the receiver coil groups 301a, 302a, 303a, 304a.

When the receiver 472 thus calculates or determines the rotation position of the rotary member 20 based on the detection signals from the first and second receiver coils 34, 36, 35, 37, the receiver 472 outputs a signal indicating the rotational position of the rotary member 20 to the external electronic controller 72 via the first terminal 49.

The above is the basic operation of the first signal processor 47. Like the first signal processor 47, the second signal processor 48 also has an oscillator 481 and a receiver 482. The oscillator 481 of the second signal processor 48 is the same as the oscillator 471 of the first signal processor 47, and the receiver 482 of the second signal processor 48 is the same as the receiver 472 of the first signal processor 47. The operation of the second signal processor 48 is the same as that of the first signal processor 47, so a description of the operation of the second signal processor 48 is omitted.

Next, the first voltage value V1 of the first receiver coils 34, 36 and the second voltage value V2 of the second receiver coils 35, 37 when the rotary member 20 rotates will be described.

For example, when an alternating current of a predetermined frequency is applied to the first transmitter coil 31, a magnetic field is generated in the member axis direction Da that passes through the first one-side receiver coil 34 and the second one-side receiver coil 35 of the first one-side receiver coil group 301a. Since the magnetic field is changed by the alternating current, electromagnetic induction generates an induced electromotive force for each of the first one-side receiver coil 34 and the second one-side receiver coil 35.

When the first one-side target 22 faces the first transmitter coil 31, the first one-side receiver coil 34, and the second one-side receiver coil 35, eddy currents are generated in the first one-side target 22 and a magnetic field caused by the eddy currents is generated. Therefore, the magnetic field passing through the first one-side receiver coil 34 and the second one-side receiver coil 35 in the member axial direction Da has a portion that passes through an area facing the first one-side target 22 and is cancelled out by the magnetic field caused by the eddy currents.

In accordance with rotation of the rotary member 20, the position and size of the area facing the first one-side target 22 changes in each of the first one-side receiver coil 34 and the second one-side receiver coil 35. The above has been described using the first one-side receiver coil group 301a as an example, but the same applies to the first other-side receiver coil group 302a.

Therefore, as the rotary member 20 rotates, the first voltage value V1 generated in the first receiver coils 34, 36 and the second voltage value V2 generated in the second receiver coils 35, 37 change periodically. In the present embodiment, for example, as shown in FIG. 9, the first voltage value V1 generated in the first receiver coils 34, 36 is a sine wave, and the second voltage value V2 generated in the second receiver coils 35, 37 is a cosine wave with the same wavelength as the first voltage value V1.

The voltage values generated in the third receiver coils 40, 42 and the voltage values generated in the fourth receiver coils 41, 43 are similar to those described above, and therefore will not be described here.

As described above, according to the present embodiment, the first one-side target 22 reciprocates in the member circumferential direction Dc. The first one-side target 22 reciprocates within the movement range W1a in which the first one-side target 22 does not overlap with the second one-side receiving area 303 and the second other-side receiving area 304 on the other side in the member axis direction Da.

Therefore, it is possible to prevent the first one-side target 22 from interfering with the magnetic flux passing through the third and fourth receiver coils 40 , 42 , 41 , 43 for detecting the positions of the second targets 24 , 25. Therefore, it is possible to reduce the influence of the first one-side target 22 on each output value (i.e., each detection signal) of the third and fourth receiver coils 40, 42, 41, 43.

In addition, the first one-side target 22 and the first other-side target 23 operate without affecting the signal processing of the second system 306, and the second one-side target 24 and the second other-side target 25 operate without affecting the signal processing of the first system 305. Therefore, the independence of the first system 305 and the second system 306 from each other can be guaranteed.

(1) Furthermore, according to the present embodiment, the movement range W1a of the first one-side target 22 is a range distributed in the member circumferential direction Dc with respect to the center position 301b of the first one-side receiving area 301 in the member circumferential direction Dc. Therefore, it is possible to make maximum use of the length of the first one-side receiving area 301 in the member circumferential direction Dc, thereby widening the movement range W1a of the first one-side target 22.

(2) Furthermore, according to the present embodiment, the first one-side target 22 reciprocates in the circumferential direction Dc without departing from an area located on the other side of the circumferential one-side end position P1 of the first one-side receiving area 301 and on the one side of the circumferential other-side end position P2 of the first one-side receiving area 301 in the member circumferential direction Dc. This makes it possible to further reduce the influence of the first one-side target 22 on the output values of the third and fourth receiver coils 40, 42, 41, and 43.

(3) Furthermore, according to the present embodiment, when viewed in a direction along the member axis direction Da, all the receiver coils 34 to 37 and 40 to 43 on the substrate 30 are arranged inside the first transmitter coil 31 and inside the second transmitter coil 32.

Therefore, even if, for example, one of the first transmitter coil 31 and the second transmitter coil 32 becomes unable to conduct electricity due to a broken wire or the like, it is possible for the other transmitter coil to cause an induced current to flow through all of the receiver coils 34 to 37 and 40 to 43. In addition, compared to a configuration in which the receiver coils 34, 36, 35, and 37 belonging to the first system 305 and the receiver coils 40, 42, 41, and 43 belonging to the second system 306 are surrounded separately by the first transmitter coil 31 and the second transmitter coil 32, the area required by the first and second transmitter coils 31 and 32 can be made smaller.

(4) Furthermore, according to the present embodiment, the spiral sections 34a to 43b of the receiver coils 34 to 37 and 40 to 43 each have a spiral pattern shape when viewed when viewed in a direction along the member axis direction Da. Therefore, for example, compared to a case where each of the receiver coils 34 to 37, 40 to 43 is formed in a pattern shape that describes a sine wave or cosine wave, the number of wiring layers formed on the substrate 30 is reduced, making it possible to manufacture more easily.

(5) Furthermore, according to the present embodiment, as shown in FIGS. 1 and 5, the first one-side target 22 is disposed on the opposite side of the first other-side target 23 across the rotary shaft center CL. The first one-side receiver coil group 301a is disposed on the opposite side of the first other-side receiver coil group 302a across the rotary shaft center CL.

This makes it possible to easily obtain a configuration that can reduce the effect of misalignment of the rotary member 20 on the output of the position detection device 1 indicating the rotational position of the rotary member 20, in other words, a configuration that is resistant to misalignment of the rotary member 20.

For example, assume that the rotary member 20 in FIG. 1 is misaligned toward the upper side of the paper. In this case, in the first system 305, in the first one-side receiving area 301, the projected area of the first one-side target 22 overlapping the first and second one-side receiver coils 34, 35 is reduced due to misalignment of the rotary member 20. In contrast, in the first other-side receiving area 302, the projected area of the first other-side target 23 overlapping the first and second other-side receiver coils 36, 37 increases due to misalignment of the rotary member 20. When the projected area of the target changes, the output of the receiver coil also changes accordingly.

Furthermore, assuming that the direction from one side to the other side of the member circumferential direction Dc is a positive direction, and looking at the second system 306, the second one-side target 24 advances due to misalignment of the rotary member 20, and conversely, the second other-side target 25 retards due to misalignment of the rotary member 20.

In this way, between the first one-side receiver coil group 301a and the first other-side receiver coil group 302a which belong to the first system 305 and are arranged point-symmetrically with respect to the rotary shaft center CL, opposite phenomena occur due to misalignment of the rotary member 20. Similarly, opposite phenomena occur between the second one-side receiver coil group 303a and the second other-side receiver coil group 304a, which are arranged point-symmetrically with respect to the rotary shaft center CL and belong to the second system 306, due to misalignment of the rotary member 20.

Therefore, by utilizing the fact that the opposite phenomenon occurs in the first system 305, a configuration that is resistant to misalignment of the rotary member 20 can be easily obtained in the first system 305. By utilizing the fact that the opposite phenomenon occurs in the second system 306, a configuration that is resistant to misalignment of the rotary member 20 can be easily obtained in the second system 306 as well.

For example, in the present embodiment, the two first receiver coils 34, 36 in the first system 305 are connected in series as described above, so that the effect of misalignment of the rotary member 20 on the coil output is offset between the two first receiver coils 34, 36. Similarly, the effect of misalignment of the rotary member 20 on the coil output is offset between the two second receiver coils 35, 37 connected in series. The same applies to the second system 306. Therefore, as described above, in the first system 305, a configuration that is resistant to misalignment of the rotary member 20 can be easily obtained, and also in the second system 306, a configuration that is resistant to misalignment of the rotary member 20 can be easily obtained.

It is considered that the angular position sensor disclosed in the above-mentioned Patent Document 1 is more vulnerable to misalignment of the rotary member than the position detection device 1 of the present embodiment. This is because the angular position sensor of Patent Document 1 does not employ a structure that offsets the effect of misalignment of the rotary member on the coil output between the two receiver coils arranged on either side of the rotary shaft center.

In addition, according to the present embodiment, as shown in FIGS. 2 and 5, all of the transmitter and receiver coils 31, 32, 34 to 37, 40 to 43 are formed on a single substrate 30, and all of the targets 22 to 25 are arranged on one side of the substrate 30 in the member axis direction Da. Therefore, the size of the position detection device 1 can be made smaller than, for example, a configuration in which the first targets 22, 23 are arranged on one side of the substrate 30 in the member axis direction Da, and the second targets 24, 25 are arranged on the other side of the substrate 30 in the member axis direction Da.

Second Embodiment:

Next, a second embodiment will be described. The present embodiment is explained mainly with respect to points different from those of the first embodiment. In addition, explanations of the same or equivalent portions as those in the above embodiment is omitted or simplified. The same applies to a description of the embodiments described later.

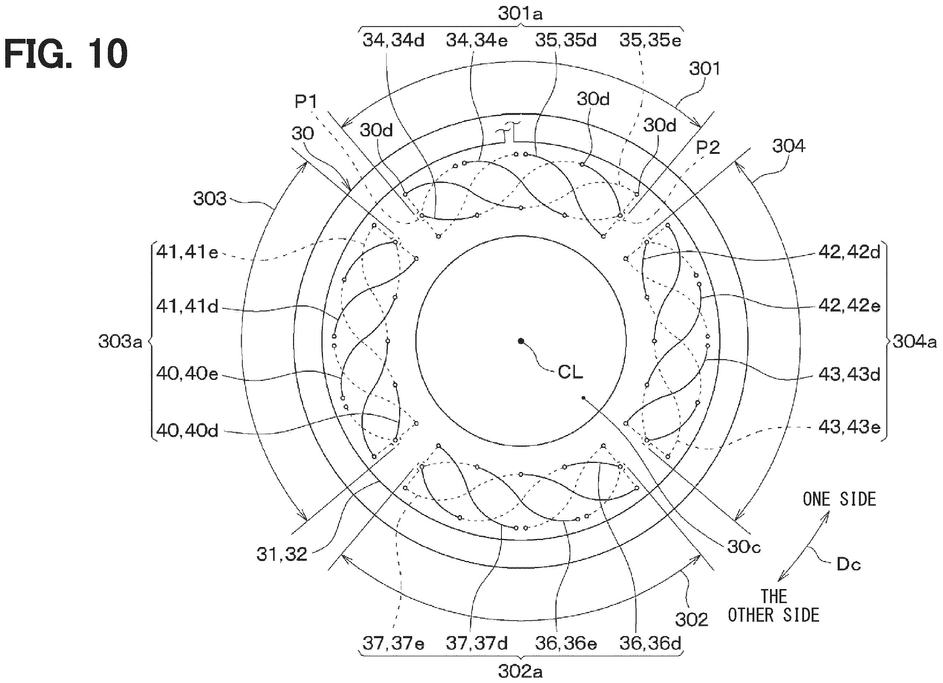

As shown in FIG. 10, pattern shapes of the receiver coils 34 to 37 and 40 to 43 in the present embodiment are different from those in the first embodiment. Therefore, the spiral sections 34a to 43b (see FIG. 5) of the first embodiment are not provided in the present embodiment.

In the present embodiment, as in the first embodiment, all receiver coils 34 to 37 and 40 to 43 are located inside the first transmitter coil 31 and inside the second transmitter coil 32 when viewed in a direction along the member axial direction Da. Each of the receiver coils 34 to 37 and 40 to 43 is composed of different wiring layers connected as appropriate through a via 30d so that they do not interfere with each other (i.e., do not overlap).

In the present embodiment, each of the receiver coils 34 to 37, 40 to 43 is composed of two adjacent wiring layers stacked in sequence and connected by the via 30d. For example, in the present embodiment, each of the receiver coils 34 to 37, 40 to 43 is formed by connecting the wiring layer on the topmost surface layer located on the other surface 30b of the substrate 30 to the next layer on the topmost surface layer. With respect to each of the receiver coils 34 to 37 and 40 to 43 in FIG. 10, the wiring layer formed on the topmost surface layer in substrate 30 is indicated by a solid line, and the wiring layer formed on the layer next to the topmost surface layer is indicated by a dashed line. The transmitter coils 31 and 32 are all shown as solid lines.

Specifically, the first one-side receiver coil 34 has a first wavy section 34d and a second wavy section 34e. The first and second wavy sections 34d and 34e each form a sinusoidal pattern shape when viewed in a direction along the member axial direction Da. The first and second wavy sections 34d and 34e are connected in series via a connecting wiring pattern, for example, to form a closed loop.

The second one-side receiver coil 35 has a first wavy section 35d and a second wavy section 35e. The first and second wavy sections 35d, 35e each have a pattern shape that draws a sinusoidal curve phase-shifted in the member circumferential direction Dc relative to the first and second wavy portions 34d and 34e of the first one-side receiver coil 34 in the member circumferential direction Dc when viewed in a direction along the member axial direction Da. The first and second wavy sections 35d and 35e are connected in series via a connecting wiring pattern, for example, to form a closed loop. For example, the wavy sections 34d, 34e, 35d, 35e of the first and second one-side receiver coils 34 and 35 are arranged to overlap the one side of the first one-side target 22 in the member axial direction Da at any position within the movement range W1a of the first one-side target 22.

The same is applied for other receiver coil groups 302a, 303a, 304a other than the first one-side receiver coil group 301a which includes the receiver coils 34 and 35 described above. That is, the first other-side receiver coil 36 has a first wavy section 36d and a second wavy section 36e that form a sinusoidal pattern shape when viewed in a direction along the member axial direction Da and are connected in series with each other. In addition, the second other-side receiver coil 37 has a first wavy section 37d and a second wavy section 37e connected in series to each other and forming a pattern shape that draws a sinusoidal curve phase-shifted in the member circumferential direction Dc relative to the first and second wavy sections 36d, 36e when viewed in a direction along the member axial direction Da. For example, the wavy sections 36d, 36e, 37d, 37e of the first and second other-side receiver coils 36 and 37 are arranged to overlap the one side of the first other-side target 23 in the member axial direction Da at a position within the movement range W1b of the first other-side target 23.

The third one-side receiver coil 40 has a first wavy section 40d and a second wavy section 40e that form a sinusoidal pattern shape when viewed in a direction along the member axial direction Da and are connected in series with each other. In addition, the fourth other-side receiver coil 41 has a first wavy section 41d and a second wavy section 41e connected in series to each other and forming a pattern shape that draws a sinusoidal curve phase-shifted in the member circumferential direction Dc relative to the first and second wavy sections 40d, 40e when viewed in a direction along the member axial direction Da. For example, the wavy sections 40d, 40e, 41d, 41e of the third and fourth one-side receiver coils 40 and 41 are arranged to overlap the one side of the second one-side target 24 in the member axial direction Da at any position within the movement range W2a of the second one-side target 24.

The third other-side receiver coil 42 has a first wavy section 42d and a second wavy section 42e that form a sinusoidal pattern shape when viewed in a direction along the member axial direction Da and are connected in series with each other. In addition, the fourth other-side receiver coil 43 has a first wavy section 42d and a second wavy section 42e connected in series to each other and forming a pattern shape that draws a sinusoidal curve phase-shifted in the member circumferential direction Dc relative to the first and second wavy sections 43d, 43e when viewed in a direction along the member axial direction Da. For example, the wavy sections 42d, 42e, 43d, 43e of the third and fourth other-side receiver coils 42 and 43 are arranged to overlap the one side of the second other-side target 25 in the member axial direction Da at a position within the movement range W2b of the second other-side target 25.

In the present embodiment, a circumferential one-side end position P1 of the first one-side receiving area 301 coincides with the one-side end position of the second one-side receiver coil 35 in the member circumferential direction Dc. A circumferential other-side end position P2 of the first one-side receiving area 301 coincides with the other end position of the second one-side receiver coil 35 in the member circumferential direction Dc. This relationship is also applied for the first other-side receiving area 302, the second one-side receiving area 303, and the second other-side receiving area 304.

(1) As described above, according to the present embodiment, each of the wavy sections 34d to 43e of the receiver coils 34 to 37 and 40 to 43 has a pattern shape that forms a sinusoidal curve when viewed in the direction along the member axis direction Da. Therefore, it is possible to cause the receiver coils 34 to 37 and 40 to 43 to output electrical signals of sine waves or cosine waves having a phase difference. In addition, the above-mentioned wavy sections 34d to 43e mean wavy sections 34d, 34e, 35d, 35e, 36d, 36e, 37d, 37e, 40d, 40e, 41d, 41e, 42d, 42e, 43d, and 43e.

The present embodiment is similar to the first embodiment, except for the above described aspects. Thus, the present embodiment can achieve the advantages obtained by the configuration common to the first embodiment described above in a similar manner as in the first embodiment.

Third Embodiment:

Next, a third embodiment will be described. The present embodiment is explained mainly with respect to points different from those of the first embodiment.

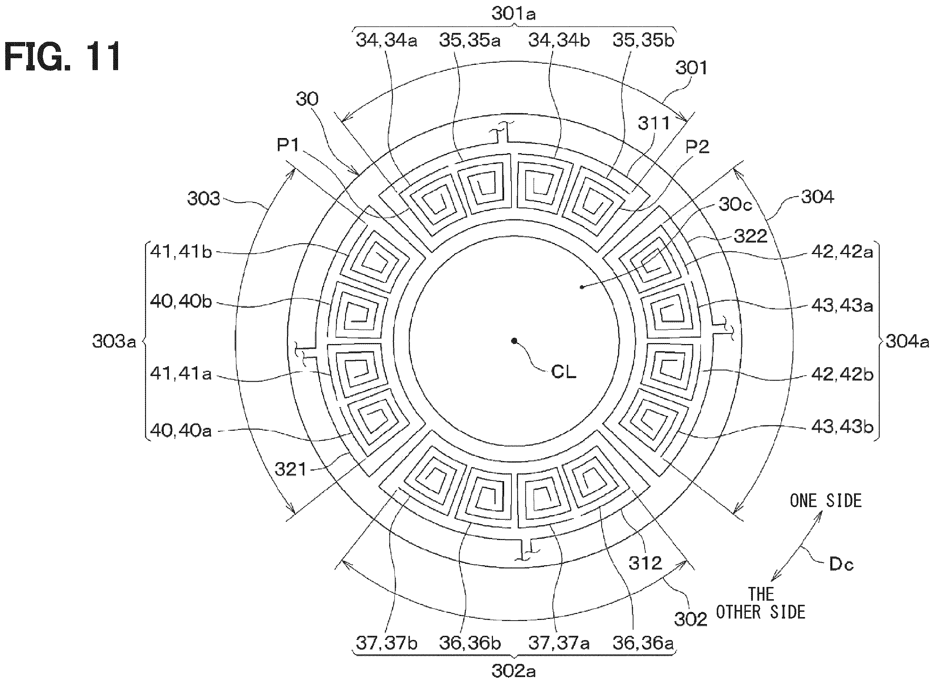

As shown in FIG. 11, a substrate 30 in this embodiment has two first transmitter coils 311 and 312 instead of the first transmitter coil 31 (see FIG. 5) of the first embodiment, and two second transmitter coils 321 and 322 instead of the second transmitter coil 32 (see FIG. 5) of the first embodiment.

The two first transmitter coils 311 and 312 are a first one-side transmitter coil 311 and a first other-side transmitter coil 312. The two second transmitter coils 321 and 322 are a second one-side transmitter coil 321 and a second other-side transmitter coil 322.

The first one-side transmitter coil 311 and the first other-side transmitter coil 312 are connected in series. Therefore, for example, when a current flows through the first one-side transmitter coil 311, a current also flows through the first other-side transmitter coil 312 at the same time. At this time, the direction of the current flowing through the first one-side transmitter coil 311 around the first one-side receiver coil group 301a is the same as the direction of the current flowing through the first other-side receiver coil group 302a. In short, when a current flows clockwise in the first one-side transmitter coil 311, a current also flows clockwise in the first other-side transmitter coil 312, and when a current flows counterclockwise in the first one-side transmitter coil 311, a current also flows counterclockwise in the first other-side transmitter coil 312.

The second one-side transmitter coil 321 and the second other-side transmitter coil 322 are also connected in series. Therefore, for example, when a current flows through the second one-side transmitter coil 321, a current also flows through the second other-side transmitter coil 322 at the same time. At this time, the direction of the current flowing through the second one-side transmitter coil 321 around the second one-side receiver coil group 303a is the same as the direction of the current flowing through the second other-side transmitter coil 322 around the second other-side receiver coil group 304a. In short, when a current flows clockwise in the second one-side transmitter coil 321, a current also flows clockwise in the second other-side transmitter coil 322, and when a current flows counterclockwise in the second one-side transmitter coil 321, a current also flows counterclockwise in the second other-side transmitter coil 322.

When viewed in a direction along the member axial direction Da, the first and second one-side receiver coils 34 and 35 are located inside the first one-side transmitter coil 311 while the other receiver coils 36, 37, 40 to 43 are located outside the first one-side transmitter coil 311. Therefore, when an alternating current flows in the first one-side transmitter coil 311, the induced current flows to the first and second one-side receiver coils 34 and 35 due to electromagnetic induction caused by energizing the first one-side transmitter coil 311.

When viewed in a direction along the member axial direction Da, the first and second other-side receiver coils 36 and 37 are located inside the first other-side transmitter coil 312 while the other receiver coils 34, 35, 40 to 43 are located outside the first other-side transmitter coil 312. Therefore, when an alternating current flows in the first other-side transmitter coil 312, the induced current flows to the first and second other-side receiver coils 36 and 37 due to electromagnetic induction caused by energizing the first other-side transmitter coil 312.

when viewed in a direction along the member axial direction Da, the third and fourth one-side receiver coils 40 and 41 are located inside the second one-side transmitter coil 321 while the other receiver coils 34 to 37, 42 and 43 are located outside the second one-side transmitter coil 321. Therefore, when an alternating current flows in the second one-side transmitter coil 321, the induced current flows to the third and fourth one-side receiver coils 40 and 41 due to electromagnetic induction caused by energizing the second one-side transmitter coil 321.

When viewed in a direction along the member axial direction Da, the third and fourth other-side receiver coils 42 and 43 are located inside the second other-side transmitter coil 322 while the other receiver coils 34 to 37, 40 and 41 are located outside the second other-side transmitter coil 322. Therefore, when an alternating current flows in the second other-side transmitter coil 322, the induced current flows to the third and fourth other-side receiver coils 42 and 43 due to electromagnetic induction caused by energizing the second other-side transmitter coil 322.

The transmitter coils 311, 312, 321, 322 are arranged at intervals from one side to the other side in the member circumferential direction Dc in the order: the first one-side transmitter coil 311, the second other-side transmitter coil 322, the first other-side transmitter coil 312 and the second one-side transmitter coil 321. Each of these transmitter coils 311, 312, 321, and 322 has a sector shape, and the transmitter coils 311, 312, 321, and 322 are arranged as a whole to form a circular ring shape centered on the rotary shaft center CL.

Except the above descriptions, the first one-side transmitter coil 311 and the first other-side transmitter coil 312 are the same as the first transmitter coil 31 of the first embodiment, and the second one-side transmitter coil 321 and the second other-side transmitter coil 322 are the same as the second transmitter coil 32 of the first embodiment.

(1) The configurations of the transmitter coils 311, 312, 321 and 322 described above makes it possible to generate electromagnetic induction to the receiver coils separately for each of the receiver coil groups 301a, 302a, 303a and 304a.

In the present embodiment, each of the transmitter coils 311, 312, 321, 322 may be formed in the same wiring layer in the substrate 30.

The present embodiment is similar to the first embodiment, except for the above described aspects. Thus, the present embodiment can achieve the advantages obtained by the configuration common to the first embodiment described above in a similar manner as in the first embodiment.

Fourth Embodiment:

A fourth embodiment is described next. The present embodiment will be explained mainly with respect to portions different from those of the third embodiment.

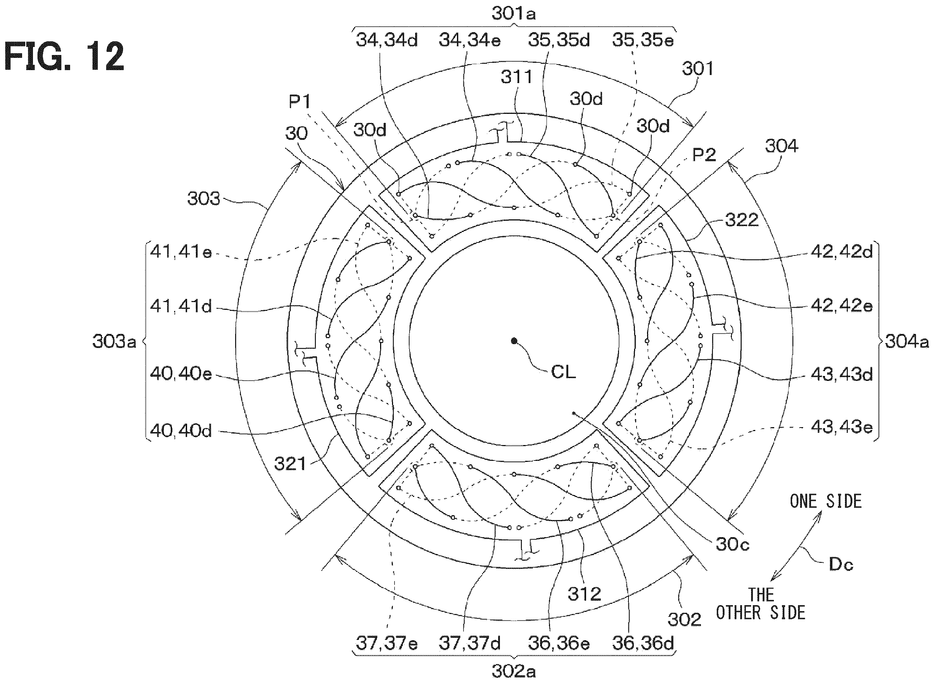

As shown in FIG. 12, each of the receiver coils 34 to 37 and 40 to 43 of the present embodiment has the pattern shape of the second embodiment instead of the pattern shape of the third embodiment.

That is, in the present embodiment, the spiral sections 34a to 43b (see FIG. 11) are not provided. Instead, the first one-side receiver coil 34 has a first wavy section 34d and a second wavy section 34e similar to the second embodiment, and the second one-side receiver coil 35 has a first wavy section 35d and a second wavy section 35e similar to the second embodiment. In addition, the first other-side receiver coil 36 has a first wavy section 36d and a second wavy section 36e similar to the second embodiment, and the second other-side receiver coil 37 has a first wavy section 37d and a second wavy section 37e similar to the second embodiment.

In addition, the third one-side receiver coil 40 has a first wavy section 40d and a second wavy section 40e similar to the second embodiment, and the fourth one-side receiver coil 41 has a first wavy section 41d and a second wavy section 41e similar to the second embodiment. In addition, the third other-side receiver coil 42 has a first wavy section 42d and a second wavy section 42e similar to the second embodiment, and the fourth other-side receiver coil 43 has a first wavy section 43d and a second wavy section 43e similar to the second embodiment.

Aside from the above described aspects, the present embodiment is the same as the third embodiment. Thus, the present embodiment can achieve the advantages obtained by the configuration common to the third embodiment described above in a similar manner as in the third embodiment.

Fifth embodiment:

A fifth embodiment is described next. The present embodiment is explained mainly with respect to points different from those of the first embodiment.

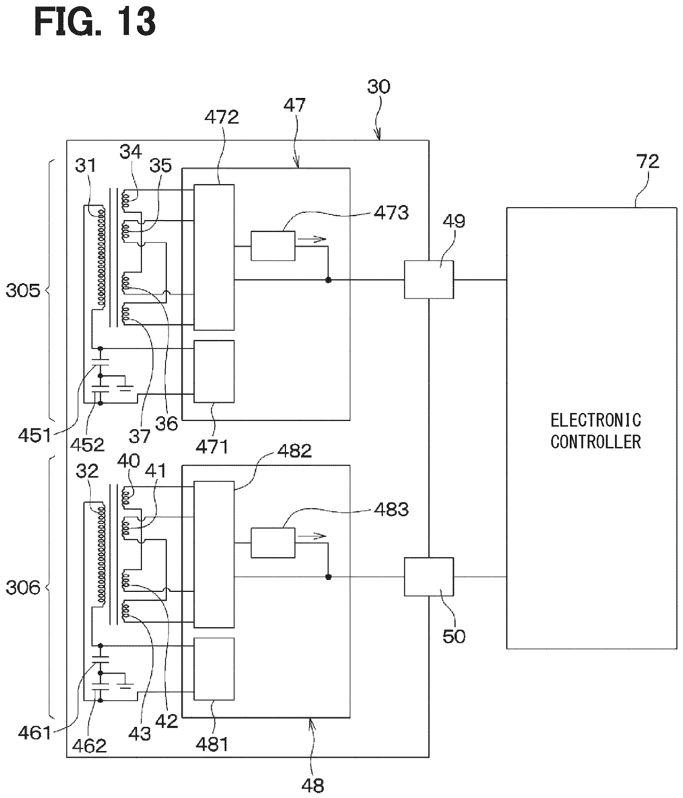

As shown in FIG. 13, the first signal processor 47 includes a first failure detection unit 473, and the second signal processor 48 includes a second failure detection unit 483. The present embodiment is different from the first embodiment in this point.

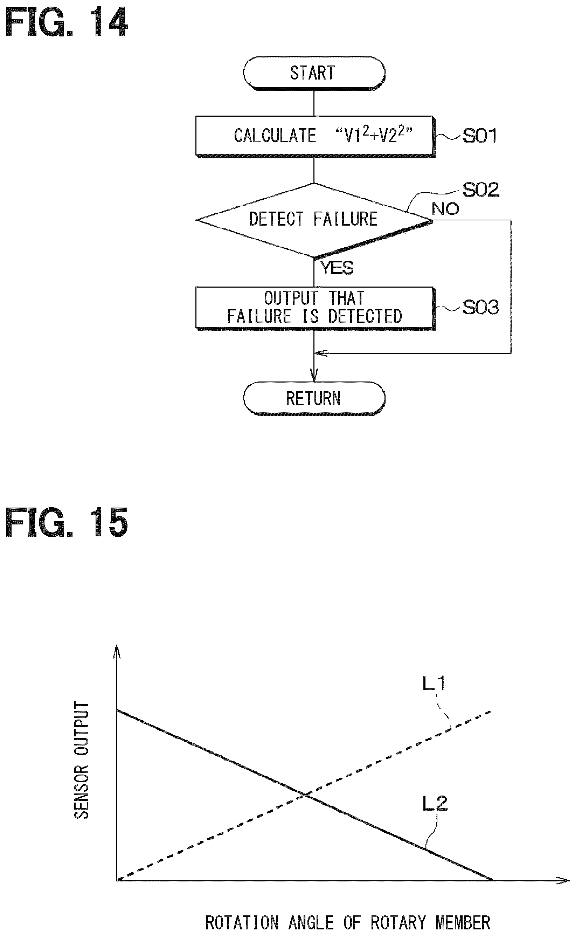

Specifically, the first failure detection unit 473 executes the control process shown in FIG. 14. The flowchart in FIG. 14 is repeatedly executed periodically.

As shown in FIG. 14, first, in step S01, the first failure detection unit 473 acquires, from the , the detection signals output from the two first receiver coils 34, 36 connected in series. At the same time, the first failure detection unit 473 also acquires, from the receiver 472, the detection signals output from the two second receiver coils 35 and 37 connected in series. As shown in FIG.9, the magnitude of the detection signal output from the first receiver coils 34, 36 is specifically a first voltage value V1, and the magnitude of the detection signal output from the second receiver coils 35, 37 is specifically a second voltage value V2.

As described above, the first voltage value V1 changes sinusoidally with respect to the electrical angle θ corresponding to the rotational position of the rotary member 20, and the second voltage value V2 changes cosineally with respect to the electrical angle θ in synchronization with the first voltage value V1. In short, the first voltage value V1 and the second voltage value V2 change with respect to the electrical angle θ as shown in FIG. 9. Based on the above situation and the following formula F1, which is a trigonometric formula, it is considered that the determination value Vx calculated from the following formula F2 will be a constant value even if the electrical angle θ changes, if there is no error in each detection signal.

$$\sin^2\theta + \cos^2\theta = 1 \,...(F1)$$

$$Vx=V1^2+V2^2...(F2)$$

Therefore, in step S01 of FIG. 14, the determination value Vx is calculated from the above formula F2 based on the first voltage value V1 and the second voltage value V2. After executing S01, the process proceeds to S02.

In step S02, the first failure detection unit 473 detects a failure based on the determination value Vx. Specifically, the failure detected in step S02 is a failure in a component of the position detection device 1 that is related to the detection signal output from the first receiver coils 34, 36 or the detection signal output from the second receiver coils 35, 37.

In detail, as described above, it is ideal that the determination value Vx does not vary with respect to the electrical angle θ. Therefore, when the variation of the determination value Vx with respect to the electrical angle θ exceeds a predetermined limit, the first failure detection unit 473 determines that a failure has occurred. In other words, the first failure detection unit 473 determines that a failure has been detected.

For example, it may be determined that a failure has been detected when the determination value Vx calculated from the above formula F2 falls outside a predetermined allowable range including an ideal value of the determination value Vx. The ideal value of the determination value Vx is the determination value Vx when there is no error between the first voltage value V1 and the second voltage value V2. Alternatively, it may be determined that a failure has been detected when the rate at which the determination value Vx calculated from the above formula F2 varies with respect to the electrical angle θ (i.e., the rate of variation) exceeds a predetermined limit value.

When it is determined in step S02 that a failure has been detected, the process proceeds to step S03. On the other hand, when it is determined that no failure has been detected, this flow chart ends and a new flow chart starts again from step S01.

In step S03, the first failure detection unit 473 outputs a signal indicating that a failure has been detected. An output indicating that a failure has been detected is input to the external electronic controller 72 via the first terminal 49.

The detection of a failure based on the first voltage value V1 and the second voltage value V2 is as described above. Since the operation of the second failure detection unit 483 shown in FIG. 13 is similar to the operation of the first failure detection unit 473 described above, a description of the operation of the second failure detection unit 483 will be omitted.

(1) As described above, according to the present embodiment, the first failure detection unit 473 in FIG. 13 detects a failure based on the determination value Vx obtained from the above formula F2. Therefore, a failure can be detected without requiring any additional structure. For example, high functional safety can be provided without the need to increase the size of the substrate 30. Furthermore, since the number of patterns required for failure detection does not increase, it is easy to increase the pattern area per receiver coil, which ensures the amplitude of the detection signal and improves robustness against misalignment of the rotary member 20.

Here, in order to explain the effects of the present embodiment, a following first comparative example will be considered. For example, in the first comparative example, the first sensor output output from the first system 305 increases as the rotation angle of the rotary member 20 increases, as indicated by a dashed line L1 in FIG. 15. The second sensor output from the second system 306 decreases as the rotation angle of the rotary member 20 increases, as indicated by a solid line L2 in FIG. 15. In short, the first sensor output and the second sensor output are set to have an inverse correlation with each other with respect to the rotation angle of the rotary member 20.

In the case of this first comparative example, the sum of the first sensor output and the second sensor output will be a constant value if it is normal and there is no error, so by monitoring the sum of the first and second sensor outputs, it is possible to detect a failure (in other words, determine whether there is an abnormality). However, in the first comparative example, although it is possible to detect a failure, it is not possible to determine which of the first and second sensor outputs is the normal value when a failure is detected.

In contrast, in the present embodiment, it is possible to determine whether or not a failure has occurred in each of the first system 305 and the second system 306. Therefore, even if a failure is detected in one of the first system 305 and the second system 306, it is possible to detect the rotation angle of the rotary member 20 using the other system which is functioning normally.

The present embodiment is similar to the first embodiment, except for the above described aspects. Thus, the present embodiment can achieve the advantages obtained by the configuration common to the first embodiment described above in a similar manner as in the first embodiment.

The present embodiment is a modification based on the first embodiment and can also be combined with any of the second to the fourth embodiments described above.

Sixth Embodiment:

A sixth embodiment is described next. The present embodiment is explained mainly with respect to points different from those of the first embodiment.

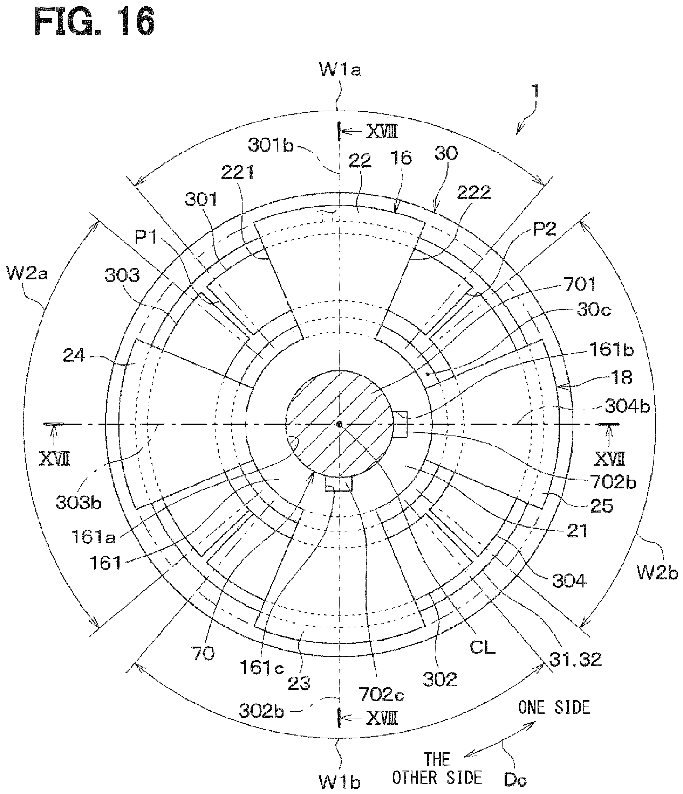

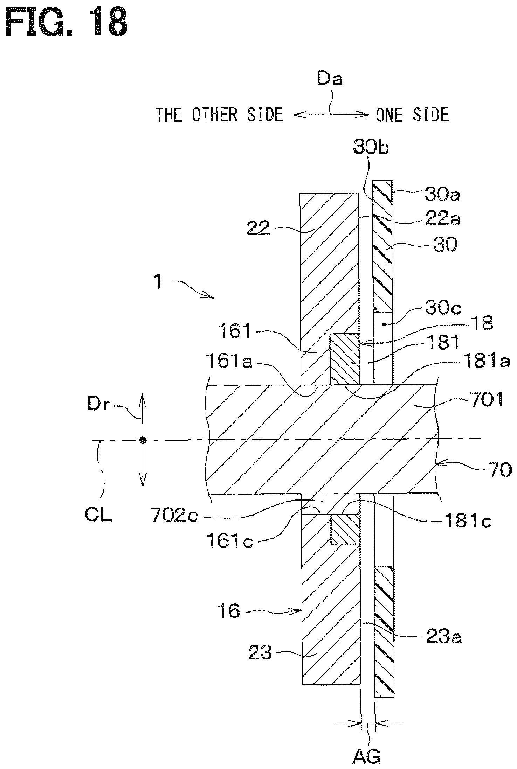

As shown in FIGS. 16 to 18, in the present embodiment, the rotary member 20 (see FIG. 1) of the first embodiment is made up of two parts. That is, in the present embodiment, the position detection device 1 includes a first target member 16 and a second target member 18 combined with each other, instead of the rotary member 20 of the first embodiment. The first target member 16 and the second target member 18 in the present embodiment correspond as a whole to the rotary member 20 in the first embodiment, and therefore the rotary shaft center CL is the center of rotation of the first target member 16 and the second target member 18. The first target member 16 and the second target member 18 are made of metal, similar to the rotary member 20 of the first embodiment.

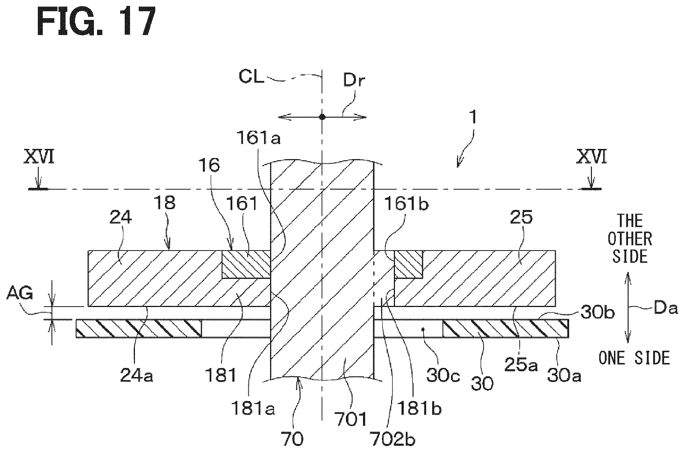

An overall shape of the first target member 16 and the second target member 18 of the present embodiment combined is the same as that of the rotary member 20 of the first embodiment when viewed in the direction along the member axial direction Da. For example, when viewed in the direction along the member axis direction Da, the shape and arrangement of each of the targets 22 to 25 are the same as those in the first embodiment. FIG. 16 is a cross-sectional view taken along line XVI-XVI of FIG. 17.

The first target member 16 has a first connecting portion 161 and two first targets 22 and 23. In addition, the second target member 18 has a second connecting portion 181 and two second targets 24 and 25. For example, the first target member 16 is configured as a single part including a first connecting portion 161 and two first targets 22, 23, and the second target member 18 is configured as a single part including a second connecting portion 181 and two second targets 24, 25.

The first connecting portion 161 and the second connecting portion 181 as a whole correspond to the connecting portion 21 of the first embodiment. Specifically, the first connecting portion 161 is disposed in the central portion of the first target member 16 and has an annular shape centered on the rotary shaft center CL. The two first targets 22 and 23 are each formed so as to protrude outward from the first connecting portion 161 in the member radial direction Dr, and are disposed outward from the second connecting portion 181 in the member radial direction Dr. A first insertion hole 161a is formed on the inside of the first connecting portion 161, penetrating the first connecting portion 161 in the member axial direction Da, and the rotary shaft 70 is inserted into the first insertion hole 161a. As a result, the first connecting portion 161 is connected to the rotary shaft 70 without connecting to the second target member 18 so as to be unable to rotate relatively to the rotary shaft 70.

The second connecting portion 181 is stacked on one side of the first connecting portion 161 in the member axial direction Da. The second connecting portion 181 has a shape similar to that of the first connecting portion 161 when viewed in the direction along the member axis direction Da.

That is, the second connecting portion 181 is disposed in the central portion of the second target member 18 and has an annular shape centered on the rotary shaft center CL. The two second targets 24 and 25 are each formed so as to protrude outward from the second connecting portion 181 in the member radial direction Dr, and are disposed outward from the first connecting portion 161 in the member radial direction Dr. A second insertion hole 181a is formed on the inner side of the second connecting portion 181, penetrating the second connecting portion 181 in the member axial direction Da.

The second insertion hole 181a is concentric with and has the same diameter as the first insertion hole 161a, and is disposed so as to continue from the first insertion hole 161a in the member axial direction Da. In short, the first insertion hole 161a and the second insertion hole 181a are arranged in series to form one through hole. The rotary shaft 70 is also fitted into the second insertion hole 181a in the same manner as the first insertion hole 161a. As a result, the second connecting portion 181 is connected to the rotary shaft 70 without connecting to the first target member 16 so as to be unable to rotate relatively to the rotary shaft 70.

In detail, the rotary shaft 70 has a cylindrical shaft body 701 and two protrusions 702b and 702c. The shaft body 701 is a portion of the rotary shaft 70 that is fitted and accommodated inside the first insertion hole 161a and the second insertion hole 181a. Each of one-side protrusion 702b, which is one of the two protrusions 702b, 702c, and the other-side protrusion 702c, which is the other of the two protrusions 702b, 702c, protrudes outward from the shaft body 701 in the member radial direction Dr. The one-side protrusion 702b and the other-side protrusion 702c each have a rectangular cross section, extend in the member axial direction Da, and are disposed at intervals in the member circumferential direction Dc. For example, the two protrusions 702 b , 702 c may be integral with the shaft body 701, or may be formed of a key member fitted into a key groove provided in the shaft body 701.

In addition to the first insertion hole 161a described above, the first connecting portion 161 is formed with two first fitting grooves 161b and 161c connected to the first insertion hole 161a. One of the two first fitting grooves 161b, 161c is referred to as a first one-side fitting groove 161b, and the other of the two first fitting grooves 161b, 161c is referred to as a first other-side fitting groove 161c. When viewed in a direction along the member axial direction Da, the two first fitting grooves 161b, 161c are each formed as grooves recessed outward from the first insertion hole 161a in the member radial direction Dr, and are arranged at intervals from each other in the member circumferential direction Dc.

Similarly, in the second connecting portion 181, in addition to the above-mentioned second insertion hole 181a, two second fitting grooves 181b, 181c connected to the second insertion hole 181a are formed. One of the two second fitting grooves 181b, 181c is referred to as a second one-side fitting groove 181b, and the other of the two second fitting grooves 181b, 181c is referred to as a second other-side fitting groove 181c. When viewed in a direction along the member axial direction Da, the two second fitting grooves 181b, 181c are each formed as grooves recessed outward from the second insertion hole 181a in the member radial direction Dr, and are arranged at intervals from each other in the member circumferential direction Dc.

Furthermore, when viewed in the direction along the member axial direction Da, the second one-side fitting groove 181b has the same shape and is arranged in the same manner as the first one-side fitting groove 161b, and the second other-side fitting groove 181c has the same shape and is arranged in the same manner as the first other-side fitting groove 161c. In short, the first one-side fitting groove 161b and the second one-side fitting groove 181b are arranged in series so as to be continuously connected in the member axial direction Da, forming a single groove extending in the member axial direction Da. Similarly, the first other-side fitting groove 161c and the second other-side fitting groove 181c are arranged in series so as to be continuously connected in the member axial direction Da, forming a single groove extending in the member axial direction Da.

The one-side protrusion 702b of the rotary shaft 70 is fitted into the first one-side fitting groove 161b and the second one-side fitting groove 181b, and the other-side protrusion 702c of the rotary shaft 70 is fitted into the first other-side fitting groove 161c and the second other-side fitting groove 181c.

In the first target member 16, the facing surface 22a of the first one-side target 22 and the facing surface 23a of the first other-side target 23 are each disposed on one side of the first connecting portion 161 in the member axis direction Da. Therefore, a step in the member axial direction Da is formed between the facing surface 22a of the first one-side target 22 and the first connecting portion 161, and a step in the member axial direction Da is also formed between the facing surface 23a of the first other-side target 23 and the first connecting portion 161.

As a result, in the present embodiment, similarly to the first embodiment, the axial distances AG between the substrate 30 and the facing surfaces 22a, 23a, 24a, 25a of the four targets 22 to 25 are aligned with one another. In other words, the axial distance AG between the substrate 30 and each of the facing surfaces 22a, 23a, 24a, and 25a of the four targets 22 to 25 is the same.

In the present embodiment, similarly to the first embodiment, the thicknesses of the four targets 22 to 25 in the member axial direction Da are the same as each other.

(1) As described above, according to the present embodiment, the first target member 16 including the two first targets 22, 23 is connected without the second target member 18 so as to be unable to rotate relative to the rotary shaft 70. The second target member 18 including the two second targets 24, 25 is connected to the rotary shaft 70 without the first target member 16 in between so as to be unable to rotate relatively to the rotary shaft 70.

Therefore, compared to, for example, a case in which the four targets 22 to 25 are included in a single component, the failure of either one of the first targets 22, 23 or the second targets 24, 25 can be mitigated or prevented from affecting the other. This makes it possible to increase the redundancy of the position detection device 1.

For example, failure of the first and second target members 16, 18 may result in the target position being shifted by several degrees from the normal position due to wear, or the axial distance AG between the target and the substrate 30 may change from the normal position. Even if such a failure occurs in one of the first and second target members 16, 18, the failure is unlikely to affect the other target member, and the rotational position of the rotary shaft 70 can be detected by the other target member.

Furthermore, as a failure of one of the first and second target members 16, 18, in addition to the above-mentioned wear, slight deformation of that one target member or slight misalignment in the member circumferential direction Dc may also be considered. Even in such a case, the failure is unlikely to affect the other target member, and the rotational position of the rotary shaft 70 can be detected by the other target member.

(2) Furthermore, according to the present embodiment, the first insertion hole 161a and the second insertion hole 181a are arranged to be connected to each other in the member axial direction Da. The first one-side fitting groove 161b and the second one-side fitting groove 181b are also arranged to be connected to each other in the member axial direction Da, and the first other-side fitting groove 161c and the second other-side fitting groove 181c are also arranged to be connected to each other in the member axial direction Da. The one-side protrusion 702b of the rotary shaft 70 is fitted into the first one-side fitting groove 161b and the second one-side fitting groove 181b, and the other-side protrusion 702c of the rotary shaft 70 is fitted into the first other-side fitting groove 161c and the second other-side fitting groove 181c.

Therefore, the first target member 16 is connected without passing through the second target member 18 so that it cannot rotate relative to the rotary shaft 70, and the second target member 18 is connected without passing through the first target member 16 so that it cannot rotate relative to the rotary shaft 70. Furthermore, the configuration in which the first and second target members 16, 18 are connected to the rotary shaft 70 can be realized with a simple structure.

(3) Furthermore, according to the present embodiment, the facing surfaces 22a and 23a of the two first targets 22 and 23 are each disposed on one side of the first connecting portion 161 in the member axis direction Da. This ensures that the axial distance AG between the substrate 30 and the facing surfaces 22a, 23a of the first targets 22, 23 and the axial distance AG between the substrate 30 and the facing surfaces 24a, 25a of the second targets 24, 25 are aligned with each other. Therefore, it is possible to easily attach the first target member 16 and the second target member 18 to the rotary shaft 70 by combining them, and to make the outputs of the receiver coils 34 to 37 and 40 to 43 approximately equal in magnitude.

The present embodiment is similar to the first embodiment, except for the above described aspects. Thus, the present embodiment can achieve the advantages obtained by the configuration common to the first embodiment described above in a similar manner as in the first embodiment.

Although the present embodiment is a modification based on the first embodiment, the present embodiment can be combined with any of second to fifth embodiments described above.

Seventh Embodiment:

A seventh embodiment is described next.

The angular position sensor described in Patent Document 1 utilizes electromagnetic induction to detect the rotational position of a rotary member, which serves as a detection object that rotates about a rotary shaft center. Specifically, the angular position sensor of Patent Document 1 includes a pair of transmitter coils that generate an AC magnetic field, and a pair of receiver coil groups.

Each of the pair of receiver coil groups includes a plurality of receiver coils, and one of the pair of receiver coil groups is disposed on the opposite side of the rotary shaft center from the other receiver coil group. One of the pair of transmitter coils is formed so as to surround one of the receiver coil groups, and the other of the pair of transmitter coils is formed so as to surround the other receiver coil group.

Here, in a position detection device such as the angular position sensor of Patent Document 1, there is a concern that the rotary member may become misaligned with respect to the substrate having the transmitter coil and receiver coil.

However, in the angular position sensor of Patent Document 1, no measures are taken against misalignment of the rotary member with respect to the substrate. Therefore, misalignment of the rotary member has a large effect on the output of the angular position sensor that indicates the rotational position of the rotary member. For example, misalignment of the rotary member can lead to a decrease in the detection accuracy of the rotational position of the rotary member.

In contrast, in the present embodiment, it is possible to easily obtain a configuration that can reduce the effect of misalignment of the rotary member on the output of the position detection device that indicates the rotational position of the rotary member, in other words, a configuration that is resistant to misalignment of the rotary member.

Specifically, the present embodiment is similar to the first embodiment. Therefore, in the present embodiment, it is possible to obtain the same effects as in the first embodiment, which are achieved by the configuration common to the first embodiment described above.

Summary of the Seventh Embodiment:

The seventh embodiment is configured as described above. Therefore, in summary, it can be said that the seventh embodiment has the following aspects.

An aspect 1:

A position detection device includes:

a rotary member (16, 18, 20) having a first one-side target (22), a first other-side target (23), a second one-side target (24), and a second other-side target (25), and rotating about a predetermined rotary shaft center (CL); and
a substrate (30) having a first transmitter coil (31, 311, 312), a second transmitter coil (32, 321, 322), a first one-side receiver coil (34) and a second one-side receiver coil (35) constituting a first one-side receiver coil group (301a) in which an electromotive force corresponding to a position of the first one-side target is generated by electromagnetic induction due to energization of the first transmitter coil, a first other-side receiver coil (36) and a second other-side receiver coil (37) constituting a first other-side receiver coil group (302a) in which an electromotive force corresponding to a position of the first other-side target is generated by electromagnetic induction due to energization of the first transmitter coil, a third one-side receiver coil (40) and a fourth one-side receiver coil (41) constituting a second one-side receiver coil group (303a) in which an electromotive force corresponding to a position of the second one-side target is generated by electromagnetic induction due to energization of the second transmitter coil, and a third other-side receiver coil (42) and a fourth other-side receiver coil (43) constituting a second other-side receiver coil group (304a) in which an electromotive force corresponding to a position of the second other-side target is generated by electromagnetic induction due to energization of the second transmitter coil.

The substrate is disposed to face the first one-side target, the first other-side target, the second one-side target, and the second other-side target, with an axial direction (Da) of the rotary shaft center being a normal direction, and on one side in the axial direction relative to the first one-side target, the first other-side target, the second one-side target, and the second other-side target.

The first one-side receiver coil and the first other-side receiver coil are connected in series in a direction in which the induced electromotive forces of each other are strengthened.

The second one-side receiver coil and the second other-side receiver coil are connected in series in a direction in which the induced electromotive forces of each other are strengthened.

The third one-side receiver coil and the third other-side receiver coil are connected in series in a direction in which the induced electromotive forces of each other are strengthened.

The fourth one-side receiver coil and the fourth other-side receiver coil are connected in series in a direction in which the induced electromotive forces of each other are strengthened.

The first one-side target is disposed on an opposite side of the rotary shaft center with respect to the first other-side target.

The second one-side target is disposed on an opposite side of the rotary shaft center with respect to the second other-side target.

the first one-side receiver coil group is disposed on an opposite side of the rotary shaft center with respect to the first other-side receiver coil group.

The second one-side receiver coil group is arranged on the opposite side of the rotary shaft center with respect to the second other-side receiver coil group.

According to this configuration, the effect of misalignment of the rotary member on the coil output of each of the receiver coils connected in series to each other as described above is offset. Therefore, a configuration that is resistant to misalignment of the rotary member can be easily obtained.

An aspect 2:

The position detection device according to aspect 1, wherein, when viewed in a direction along the axial direction, the first one-side receiver coil, the first other-side receiver coil, the second one-side receiver coil, the second other-side receiver coil, the third one-side receiver coil, the third other-side receiver coil, the fourth one-side receiver coil, and the fourth other-side receiver coil are arranged inside the first transmitter coil and inside the second transmitter coil.

An aspect 3:

In the position detection device according to aspect 1, the first transmitter coil is provided in two numbers, and the two first transmitter coils include a first one-side transmitter coil (311) and a first other-side transmitter coil (312).

The second transmitter coils are also provided in two numbers, and the two second transmitter coils include a second one-side transmitter coil (321) and a second other-side transmitter coil (322).

When viewed in a direction along the axial direction, the first one-side receiver coil and the second one-side receiver coil are disposed inside the first one-side transmitter coil, and are disposed outside the first other-side transmitter coil, outside the second one-side transmitter coil, and outside the second other-side transmitter coil.

When viewed in a direction along the axial direction, the first other-side receiver coil and the second other-side receiver coil are disposed inside the first other-side transmitter coil, and are disposed outside the first one-side transmitter coil, outside the second one-side transmitter coil, and outside the second other-side transmitter coil.

When viewed in a direction along the axial direction, the third one-side receiver coil and the fourth one-side receiver coil are disposed inside the second one-side transmitter coil, and are disposed outside the first one-side transmitter coil, the first other-side transmitter coil, and the second other-side transmitter coil.

When viewed in a direction along the axial direction, the third other-side receiver coil and the fourth other-side receiver coil are disposed inside the second other-side transmitter coil, and are disposed outside the first one-side transmitter coil, outside the first other-side transmitter coil, and outside the second one-side transmitter coil.

An aspect 4:

The position detection device according to any one of aspects 1 to 3, wherein each of the first one-side receiver coil, the first other-side receiver coil, the second one-side receiver coil, the second other-side receiver coil, the third one-side receiver coil, the third other-side receiver coil, the fourth one-side receiver coil, and the fourth other-side receiver coil has a plurality of spiral sections (34a, 34b, 35a, 35b, 36a, 36b, 37a, 37b, 40a, 40b, 41a, 41b, 42a, 42b, 43a, 43b) that form a spiral pattern when viewed in a direction along the axial direction.

An aspect 5:

The position detection device according to any one of aspects 1 to 3, wherein each of the first one-side receiver coil, the first other-side receiver coil, the second one-side receiver coil, the second other-side receiver coil, the third one-side receiver coil, the third other-side receiver coil, the fourth one-side receiver coil, and the fourth other-side receiver coil has a plurality of wavy sections (34d, 34e, 35d, 35e, 36d, 36e, 37d, 37e, 40d, 40e, 41d, 41e, 42d, 42e, 43d, 43e) forming a pattern shape that draws a sinusoidal curve when viewed in a direction along the axial direction.

Other Embodiments:

(1) In each of the above embodiments, the position detection device 1 is used, for example, to detect the rotational position of a brake pedal or accelerator pedal for a vehicle, but the use of the position detection device 1 is not limited to this and can be assumed in various ways. The position detection device 1 may also be used for applications other than for vehicles.

(2) In each of the above mentioned embodiments, for example, as shown in FIG. 1, the movement direction of targets 22 to 25 is the member circumferential direction Dc, but this is just one example. For example, the targets 22 to 25 may linearly reciprocate, and the position detection device 1 may detect the position of the targets 22 to 25 in the movement direction.

(3) In each of the above mentioned embodiments, all four targets 22 to 25 have the same circular-sector shape, as shown in FIG. 1, but this is just one example. The shape of the targets 22 to 25 does not have to have the circular-sector shape, and the shapes of the targets 22 to 25 may differ from each other.

(4) In each of the above embodiments, for example, as shown in FIG. 1, the rotary member 20 has two first targets 22 and 23, but one of the two first targets 22 and 23 may be omitted. Similarly, one of the two second targets 24 and 25 of the rotary member 20 may be omitted. Further, the rotary member 20 may have three or more first targets 22 and 23 and three or more second targets 24 and 25.

(5) In each of the above embodiments, as shown in FIG. 8, the position detection device 1 has the first system 305 and the second system 306, which are independent electrical circuits, but the position detection device 1 may have three or more systems that are independent electrical circuits.

(6) In each of the above-described embodiments, for example as shown in FIG. 5, the first one-side receiver coil group 301a is disposed on the opposite side of the rotary shaft center CL with respect to the first other-side receiver coil group 302a. The first system 305 (see FIG. 8) includes a pair of receiver coil groups 301a, 302a arranged on both sides of the rotary shaft center CL. However, this is merely an example, and it is also possible to have two or more pairs of receiver coil groups arranged on both sides of the rotary shaft center CL. The same applies to the second system 306.

(7) In each of the above-described embodiments, the first system 305 includes the first one-side receiver coil group 301a and the first other-side receiver coil group 302a. However, this configuration is merely an example. For example, the first system 305 may include only one of the first one-side receiver coil group 301a and the first other-side receiver coil group 302a, and may not include the other receiver coil group. In this case as well, the waveform of the detection signal output by the first receiver coil belonging to one of the receiver coil groups becomes a sine wave similar to the waveform of the first voltage value V1 in FIG. 9. The waveform of the detection signal output by the second receiver coil belonging to one of the receiver coil groups becomes a cosine wave similar to the waveform of the second voltage value V2 in FIG. 9. Therefore, for example, failure detection using the control process in FIG. 14 can be performed in the same manner as in the fifth embodiment described above. The same applies to the second system 306.

(8) In the above-described sixth embodiment, as shown in FIG. 16 , the one-side protrusion 702b and the other-side protrusion 702c each have a rectangular cross-section and extend in the member axial direction Da, but their cross-sectional shapes are not limited to rectangular cross-sections. For example, the cross-sectional shape of each of the one-side protrusion 702b and the other-side protrusion 702c may be various shapes such as a trapezoid, a polygonal shape, or a semicircular shape.

(9) In each of the above-described embodiments, for example, alternating currents of the same frequency flow through the first transmitter coil 31 and the second transmitter coil 32. However, this is not limited to the above. For example, as long as the directions of current flowing through the first transmitter coil 31 and the second transmitter coil 32 are not opposite at the same timing, the currents do not have to have the same frequency.

(10) In the fifth embodiment described above, the process of each step shown in the flowchart of FIG. 14 is implemented by a computer program, but may be implemented by hardware.

(11) The present disclosure is not limited to the above-described embodiments, and can be implemented in various modifications. The above-described embodiments are not independent of each other, and can be appropriately combined together except when the combination is obviously impossible.

The constituent element(s) of each of the above embodiments is/are not necessarily essential unless it is specifically stated that the constituent element(s) is/are essential in the above embodiment, or unless the constituent element(s) is/are obviously essential in principle. Furthermore, in each of the above embodiments, in the case where the number of the constituent element(s), the value, the amount, the range, and/or the like is specified, the present disclosure is not necessarily limited to the number of the constituent element(s), the value, the amount, and/or the like specified in the embodiment unless the number of the constituent element(s), the value, the amount, and/or the like is indicated as indispensable or is obviously indispensable in view of the principle of the present disclosure. Further, in each of the embodiments described above, when referring to the material, shape, positional relationship, and the like of the components and the like, except in the case where the components are specifically specified, and in the case where the components are fundamentally limited to a specific material, shape, positional relationship, and the like, the components are not limited to the material, shape, positional relationship, and the like.

Additionally, the signal processors 47, 48 and techniques described herein may be implemented by a special purpose computer provided by configuring a processor and memory programmed to perform one or more functions embodied in a computer program. Alternatively, the signal processors 47, 48 and the techniques described herein may be implemented in a special purpose computer provided by configuring a processor with one or more dedicated hardware logic circuits. Alternatively, the signal processors 47, 48 and techniques described herein may be implemented using one or more special purpose computers configured using a combination of a processor and memory programmed to perform one or more functions, and a processor configured using one or more hardware logic circuits. The computer programs may be stored, as instructions to be executed by a computer, in a tangible non-transitory computer-readable medium.

Various Aspects of Present Disclosure:

The present disclosure described above can be understood from the following features, for example.

Aspect 1:

A position detection device includes:

a first target (22, 23) that reciprocates in a predetermined movement direction (Dc); a second target (24, 25) that reciprocates in the movement direction together with the first target; and a substrate (30) having a first transmitter coil (31, 311, 312) and a second transmitter coil (32, 321, 322), a first receiver coil (34, 36) and a second receiver coil (35, 37) that generate an induced current due to electromagnetic induction caused by an energization of the first transmitter coil, outputting detection signals (V1, V2) corresponding to a position of the first target, and a third receiver coil (40, 42) and a fourth receiver coil (41, 43) that generate an induced current due to electromagnetic induction caused by an energization of the second transmitter coil, outputting detection signals corresponding to a position of the second target. The substrate is disposed to face both the first target and the second target, with a normal direction (Da) defined as a direction intersecting the movement direction, and on one side of the normal direction relative to the first target and the second target.

A first receiving area (301, 302) occupied by the first receiver coil and the second receiver coil in the substrate, and a second receiving area (303, 304) occupied by the third receiver coil and the fourth receiver coil in the substrate are arranged side by side in the movement direction.

The first target reciprocates within a movement range (W1a, W1b) in which the first target does not overlap with the other side opposite to the one side in the normal direction with respect to the second receiving area.

Aspect 2:

The position detection device according to aspect 1, wherein the movement range of the first target is a range allocated in the movement direction centered on the center position (301b, 302b) of the first receiving area in the movement direction.

Aspect 3:

The position detection device according to aspect 1 or 2, wherein the first target reciprocates in the movement direction without departing from a range between the one side corresponding to an end position (P1) on one side of the first receiving area in the movement direction and the other side corresponding to an end position (P2) on the other side of the first receiving area.

Aspect 4:

The position detection device according to any one of aspects 1 to 3, wherein, when viewed in a direction along the normal direction of the substrate, the first receiver coil, the second receiver coil, the third receiver coil, and the fourth receiver coil are arranged inside the first transmitter coil and inside the second transmitter coil.

Aspect 5:

The position detection device according to any one of aspects 1 to 3, wherein, when viewed in a direction along the normal direction of the substrate, the first receiver coil and the second receiver coil are arranged inside the first transmitter coil and are arranged outside the second transmitter coil, and the third receiver coil and the fourth receiver coil are arranged inside the second transmitter coil and arranged outside the first transmitter coil.

Aspect 6:

The position detection device according to any one of aspects 1 to 5, wherein each of the first receiver coil, the second receiver coil, the third receiver coil and the fourth receiver coil has a plurality of spiral sections (34a, 34b, 35a, 35b, 36a, 36b, 37a, 37b, 40a, 40b, 41a, 41b, 42a, 42b, 43a, 43b) that form a spiral pattern shape when viewed in a direction along the normal direction of the substrate.

Aspect 7:

The position detection device according to any one of aspects 1 to 5, wherein each of the first receiver coil, the second receiver coil, the third receiver coil and the fourth receiver coil has a plurality of wavy sections (34d, 34e, 35d, 35e, 36d, 36e, 37d, 37e, 40d, 40e, 41d, 41e, 42d, 42e, 43d, 43e) forming a pattern shape that describes a sinusoidal curve when viewed in a direction along the normal direction of the substrate.

Aspect 8:

The position detection device according to any one of aspects 1 to 7 including a failure detection unit (473, 483) that detects a fault based on a value (Vx) obtained from "$V1^2+V2^2$" when a magnitude of a detection signal output by the first receiver coil is defined as V1 and a magnitude of a detection signal output by the second receiver coil is defined as V2.
The detection signal of the first receiver coil changes sinusoidally with respect to an electrical angle ($\theta$) corresponding to a position of the first target.
The detection signal of the second receiver coil changes in a cosine wave shape with respect to the electrical angle.

Aspect 9:

In the position detection device according to any one of aspects 1 to 8, the first target and the second target each constitute a part of a rotary member (16, 18, 20) that rotates around an axis (CL) whose axial direction is the normal direction.
The movement direction is a circumferential direction (Dc) of the axis.

Aspect 10:

In the position detection device according to aspect 9, two first targets are provided, and one first target (22), which is one of the two first targets, is disposed on an opposite side of the axis to the other first target (23).
Two receiver coil groups (301a, 302a) configured as a combination of the first receiver coil and the second receiver coil are provided, and one of the two receiver coil groups (301a) is positioned on an opposite side of the axis from the other receiver coil group (302a).

Aspect 11:

In the position detection device according to aspect 10, the first receiver coil (34) belonging to one of the receiver coil groups and the first receiver coil (36) belonging to the other receiver coil group are electrically connected to each other.
The second receiver coil (35) belonging to the one of the receiver coil groups and the second receiver coil (37) belonging to the other of the receiver coil groups are also electrically connected.

Aspect 12:

In the position detection device according to aspect 10, the first receiver coil (34) belonging to one of the receiver coil groups and the first receiver coil (36) belonging to the other receiver coil group are connected in series in a direction in which the induced electromotive force generated by the electromagnetic induction of the first transmitter coil are strengthened with each other.
The second receiver coil (35) belonging to one of the receiver coil groups and the second receiver coil (37) belonging to the other receiver coil group are connected in series in a direction in which induced electromotive forces generated by the electromagnetic induction of the first transmitter coil are strengthened with each other.

Aspect 13:

The position detection device according to any one of aspects 1 to 12 includes a first target member (16) having the first target, and a second target member (18) having the second target.
The first target member is connected to the detection object (70) without an intermediary of the second target member so as to be unable to move relative to the detection object in the movement direction. The second target member is connected to the detection object without an intermediary of the first target member so as to be unable to move relative to the detection object in the movement direction.

Aspect 14:

The position detection device according to any one of aspects 1 to 8 includes a first target member (16) including the first target, the first target member having a first insertion hole (161a) into which a detection object (70) rotating around an axis (CL) whose axial direction is the normal direction is inserted and a first fitting groove (161b, 161c) connected to the first insertion hole, and a second target member (18) including the second target, the second target member (18) having a second insertion hole (181a) into which the detection object is inserted and a second fitting groove (181b, 181c) connected to the second insertion hole.
The movement direction is a circumferential direction (Dc) of the axis.
The first insertion hole and the second insertion hole are arranged to be connected to each other in the axial direction.

The first fitting groove and the second fitting groove are also arranged to be connected to each other in the axial direction.

A protrusion (702b, 702c) provided on the detection object and protruding outward in the radial direction (Dr) of the axis is fitted into the first fitting groove and the second fitting groove.

Aspect 15:

In the position detection device according to aspect 13 or 14, the first target has a facing surface (22a, 23a) formed on the one side of the normal direction and facing the substrate.

The second target has a facing surface (24a, 25a) formed on the one side of the normal direction and facing the substrate.

The first target member has a first connecting portion (161) that is connected to the detection object.

The second target member has a second connecting portion (181) that is arranged on the one side in the normal direction with respect to the first connecting portion and is connected to the detection object.

The facing surface of the first target is located on one side of the first connection portion in the normal direction, so that a distance (AG) between the facing surface of the first target and the substrate in the normal direction and a distance (AG) between the facing surface of the second target and the substrate are aligned with each other.

**Claims**

1. A position detection device, comprising:

   a first target (22, 23) configured to reciprocate in a predetermined movement direction (Dc);
   a second target (24, 25) configured to reciprocate in the movement direction together with the first target; and
   a substrate (30) having

   a first transmitter coil (31, 311, 312) and a second transmitter coil (32, 321, 322),
   a first receiver coil (34, 36) and a second receiver coil (35, 37) that generate an induced current due to electromagnetic induction caused by an energization of the first transmitter coil, outputting detection signals (V1, V2) corresponding to a position of the first target, and
   a third receiver coil (40, 42) and a fourth receiver coil (41, 43) that generate an induced current due to electromagnetic induction caused by an energization of the second transmitter coil, outputting detection signals corresponding to a position of the second target, and
being disposed to face both the first target and the second target, with a normal direction (Da) defined as a direction intersecting the movement direction, and on one side of the normal direction relative to the first target and the second target, wherein

   a first receiving area (301, 302) occupied by the first receiver coil and the second receiver coil in the substrate, and a second receiving area (303, 304) occupied by the third receiver coil and the fourth receiver coil in the substrate are arranged side by side in the movement direction, and
   the first target reciprocates within a movement range (W1a, W1b) in which the first target does not overlap with the other side opposite to the one side in the normal direction with respect to the second receiving area.

2. The position detection device according to claim 1, wherein
   the movement range of the first target is a range allocated in the movement direction centered on a center position (301b, 302b) of the first receiving area in the movement direction.

3. The position detection device according to claim 1, wherein
   the first target reciprocates in the movement direction without departing from a range between the one side corresponding to an end position (P1) on one side of the first receiving area in the movement direction and the other side corresponding to an end position (P2) on the other side of the first receiving area.

4. The position detection device according to claim 1, wherein
   when viewed in a direction along the normal direction of the substrate, the first receiver coil, the second receiver coil, the third receiver coil, and the fourth receiver coil are arranged inside the first transmitter coil and inside the second transmitter coil.

5. The position detection device according to claim 1, wherein
   when viewed in a direction along the normal direction of the substrate, the first receiver coil and the second receiver coil are arranged inside the first transmitter coil and are arranged outside the second transmitter coil, and the third receiver coil and the fourth receiver coil are arranged inside the second transmitter coil and arranged outside the first transmitter coil.

6. The position detection device according to claim 1, wherein
each of the first receiver coil, the second receiver coil, the third receiver coil and the fourth receiver coil has a plurality of spiral sections (34a, 34b, 35a, 35b, 36a, 36b, 37a, 37b, 40a, 40b, 41a, 41b, 42a, 42b, 43a, 43b) that form a spiral pattern shape when viewed in a direction along the normal direction of the substrate.

7. The position detection device according to claim 1, wherein
each of the first receiver coil, the second receiver coil, the third receiver coil and the fourth receiver coil has a plurality of wavy sections (34d, 34e, 35d, 35e, 36d, 36e, 37d, 37e, 40d, 40e, 41d, 41e, 42d, 42e, 43d, 43e) forming a pattern shape that describes a sinusoidal curve when viewed in a direction along the normal direction of the substrate.

8. The position detection device according to claim 1, further comprising,

a failure detection unit (473, 483) that detects a failure based on a value (Vx) obtained from "$V1^2 + V2^2$" when a magnitude of a detection signal output by the first receiver coil is defined as V1 and a magnitude of a detection signal output by the second receiver coil is defined as V2, wherein
the detection signal of the first receiver coil changes sinusoidally with respect to an electrical angle ($\theta$) corresponding to the position of the first target, and
the detection signal of the second receiver coil changes cosineally with respect to the electrical angle.

9. The position detection device according to any one of claims 1 to 8, wherein

the first target and the second target each constitute a part of a rotary member (16, 18, 20) that rotates around an axis (CL) whose axial direction is the normal direction, and
the movement direction is a circumferential direction (Dc) of the axis.

10. The position detection device according to claim 9, wherein

two first targets are provided, and one first target (22), which is one of the two first targets, is disposed on an opposite side of an axis with respect to other first target (23), which is other of the two first targets, and
two receiver coil groups (301a, 302a) configured as a combination of the first receiver coil and the second receiver coil are provided, and one (301a) of the two receiver coil groups is positioned on the opposite side of the axis with respect to the other (302a) of the two receiver coil groups.

11. The position detection device according to claim 10, wherein

the first receiver coil (34) belonging to one of the receiver coil groups and the first receiver coil (36) belonging to the other receiver coil group are electrically connected to each other, and
the second receiver coil (35) belonging to the one of the receiver coil groups and the second receiver coil (37) belonging to the other of the receiver coil groups are also electrically connected.

12. The position detection device according to claim 10, wherein

the first receiver coil (34) belonging to one of the receiver coil groups and the first receiver coil (36) belonging to the other receiver coil group are connected in series in a direction in which induced electromotive forces generated by the electromagnetic induction of the first transmitter coil are strengthened with each other, and
the second receiver coil (35) belonging to one of the receiver coil groups and the second receiver coil (37) belonging to the other receiver coil group are connected in series in a direction in which induced electromotive forces generated by the electromagnetic induction of the first transmitter coil are strengthened with each other.

13. The position detection device according to any one of claims 1 to 8, further comprising,

a first target member (16) having the first target, and
a second target member (18) having the second target, wherein
the first target member is connected to a detection object (70) without an intermediary of the second target member so as to be unable to move relative to the detection object in the movement direction, and
the second target member is connected to the detection object without an intermediary of the first target member so as to be unable to move relative to the detection object in the movement direction.

14. The position detection device according to any one of claims 1 to 8, further comprising,

a first target member (16) including the first target, the first target member having a first insertion hole (161a) into which a detection object (70) rotating around an axis (CL) whose axial direction is the normal direction is inserted and a first fitting groove (161b, 161c) connected to the first insertion hole, and

a second target member (18) including the second target, the second target member (18) having a second insertion hole (181a) into which the detection object is inserted and a second fitting groove (181b, 181c) connected to the second insertion hole, wherein

the movement direction is a circumferential direction (Dc) of the axis,

the first insertion hole and the second insertion hole are arranged to be connected to each other in the axial direction,

the first fitting groove and the second fitting groove are also arranged to be connected to each other in the axial direction, and

a protrusion (702b, 702c) provided on the detection object and protruding outward in a radial direction (Dr) of the axis is fitted into the first fitting groove and the second fitting groove.

15. The position detection device according to claim 13, wherein

the first target has a facing surface (22a, 23a) formed on the one side of the normal direction and facing the substrate,

the second target has a facing surface (24a, 25a) formed on the one side of the normal direction and facing the substrate,

the first target member has a first connecting portion (161) that is connected to the detection object,

the second target member has a second connecting portion (181) that is arranged on the one side in the normal direction with respect to the first connecting portion and is connected to the detection object, and

the facing surface of the first target is located on one side of the first connecting portion in the normal direction, so that a distance (AG) between the facing surface of the first target and the substrate in the normal direction and a distance (AG) between the facing surface of the second target and the substrate are aligned with each other.

EP 4 624 871 A1

# FIG. 1

26

# FIG. 2

# FIG. 3

# FIG. 4

# FIG. 5

EP 4 624 871 A1

# FIG. 6

# FIG. 7

# FIG. 8

# FIG. 9

SECOND VOLTAGE VALUE V2   FIRST VOLTAGE VALUE V1

OUTPUT SIGNAL [mV]

0

ELECTRICAL ANGLE θ [deg]

0   90   180   270   360

FIG. 10

FIG. 11

EP 4 624 871 A1

**FIG. 12**

# FIG. 13

ELECTRONIC
CONTROLLER

# FIG. 14

```
        ┌─────────────┐
        │    START    │
        └──────┬──────┘
               │
    ┌──────────┴──────────┐
    │ CALCULATE "V1²+V2²" │───S01
    └──────────┬──────────┘
               │
          ◇ DETECT FAILURE ◇───S02  NO ───┐
               │ YES                        │
    ┌──────────┴──────────┐                 │
    │     OUTPUT THAT     │───S03           │
    │ FAILURE IS DETECTED │                 │
    └──────────┬──────────┘                 │
               │◄───────────────────────────┘
        ┌──────┴──────┐
        │   RETURN    │
        └─────────────┘
```

# FIG. 15

SENSOR OUTPUT

L1

L2

ROTATION ANGLE OF ROTARY MEMBER

EP 4 624 871 A1

# FIG. 16

# FIG. 17

# FIG. 18

## INTERNATIONAL SEARCH REPORT

| International application No. |
|---|
| **PCT/JP2023/039461** |

| A. | CLASSIFICATION OF SUBJECT MATTER |
|---|---|

*G01D 5/20*(2006.01)i; *G01B 7/00*(2006.01)i
FI:   G01D5/20 110H; G01D5/20 110F; G01B7/00 101F

According to International Patent Classification (IPC) or to both national classification and IPC

| B. | FIELDS SEARCHED |
|---|---|

Minimum documentation searched (classification system followed by classification symbols)

G01D5/00-5/252; G01B7/00-7/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2019-506614 A (ROBERT BOSCH GMBH) 07 March 2019 (2019-03-07) paragraphs [0008], [0037]-[0065], [0073]-[0074], fig. 1-2, 6 | 1-9 |
| A | entire text, all drawings | 10-15 |
| Y | US 2022/0136869 A1 (MICROCHIP TECHNOLOGY INC.) 05 May 2022 (2022-05-05) paragraphs [0002]-[0003], [0035]-[0064], fig. 1-5D | 1-9 |
| A | entire text, all drawings | 10-15 |
| Y | JP 2008-309598 A (HITACHI LTD) 25 December 2008 (2008-12-25) paragraphs [0002], [0102]-[0105], fig. 9 | 1-9 |
| A | entire text, all drawings | 10-15 |
| Y | JP 2009-58498 A (HITACHI LTD) 19 March 2009 (2009-03-19) paragraphs [0008]-[0009] | 8-9 |
| A | entire text, all drawings | 10-15 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2023/039461** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2000-39336 A (TOYOTA MOTOR CORP) 08 February 2000 (2000-02-08) paragraph [0005] | 8-9 |
| A | entire text, all drawings | 10-15 |
| A | US 2020/0088544 A1 (SAMSUNG ELECTRO-MECHANICS CO., LTD.) 19 March 2020 (2020-03-19) entire text, all drawings | 10-15 |

Form PCT/ISA/210 (second sheet) (January 2015)

# EP 4 624 871 A1

<table>
<tr><td colspan="2" align="center">INTERNATIONAL SEARCH REPORT<br>Information on patent family members</td><td colspan="2">International application No.<br><br>**PCT/JP2023/039461**</td></tr>
</table>

| Patent document cited in search report | | | Publication date (day/month/year) | Patent family member(s) | | | Publication date (day/month/year) |
|---|---|---|---|---|---|---|---|
| JP | 2019-506614 | A | 07 March 2019 | US | 2019/0017845 | A1 | |
| | | | | paragraphs [0008], [0044]-[0071], [0079]-[0080], fig. 1-2, 6 | | | |
| | | | | WO | 2017/144638 | A1 | |
| | | | | EP | 3420316 | A1 | |
| | | | | DE | 102016202877 | B3 | |
| | | | | CN | 108700432 | A | |
| | | | | KR | 10-2018-0113518 | A | |
| US | 2022/0136869 | A1 | 05 May 2022 | WO | 2022/098380 | A1 | |
| | | | | DE | 112021004315 | T5 | |
| | | | | CN | 116113805 | A | |
| JP | 2008-309598 | A | 25 December 2008 | (Family: none) | | | |
| JP | 2009-58498 | A | 19 March 2009 | (Family: none) | | | |
| JP | 2000-39336 | A | 08 February 2000 | (Family: none) | | | |
| US | 2020/0088544 | A1 | 19 March 2020 | KR | 10-2020-0031495 | A | |
| | | | | CN | 110906860 | A | |

**EP 4 624 871 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022188428 A
- US 20220136869 A1